# EUROPÄISCHE PATENTSCHRIFT

(11) **EP 1 838 074 B1**
(45) Veröffentlichungstag und Bekanntmachung des Hinweises auf die Patenterteilung: **16.01.2019**
(21) Anmeldenummer: 06025008.1
(22) Anmeldetag: 12.05.2000
(51) Int. Cl.: H04M 1/27

(54) **Verfahren zum Übermitteln von Symbolen und/oder Informationen von einem Sendergerät zu wenigstens einem Empfängergerät**
Method for transmitting tokens and/or information from a transmitter apparatus to at least one receiver apparatus
Procédé destiné à la transmission de symboles et/ou d'informations à partir d'un appareil d'émission vers au moins un appareil de réception

(30) Priorität: 14.05.1999 DE 19922068; 19.05.1999 DE 19923026; 20.08.1999 DE 19940954; 27.08.1999 DE 19941642; 29.10.1999 DE 19954032
(43) Veröffentlichungstag der Anmeldung: 26.09.2007
(62) Teilanmeldung aus: 00938639.2
(73) Patentinhaber: Pear AG, 6373 Ennetbürgen (CH)
(72) Erfinder: Schütze, Petra, 13465 Berlin (DE); Scharmberg, Nils, 13509 Berlin (DE)
(74) Vertreter: Pollard, Peter Julian

(56) Entgegenhaltungen:
- WO-A-98/56197
- US-A- 5 784 001

## Beschreibung

Die Erfindung betrifft Verfahren zum Übermitteln von Symbolen und/oder Informationen von einem Sender zu einem Empfänger. Weiterhin betrifft die Erfindung Vorrichtungen zum Verschlüsseln, Senden und Empfangen von Symbolen und/oder Informationen.

Derartige Verfahren und Vorrichtungen sind aus dem Stand der Technik bekannt. Derartige Vorrichtungen und Verfahren werden beispielsweise in modernen Mobiltelefonen verwendet. In diesen Mobiltelefonen werden beispielsweise bei dem Versenden einer SMS Nachricht von dem Benutzer des sendenden Mobiltelefons bestimmte Symbole ausgewählt. Dabei handelt es sich im Stand der Technik in der Regel um die Standardsymbole "+", "-", ".", ",", ":", ";", """, "?", "!", "*", "/" , "(", ")", "<", "=", ">", "%", "&", "§", "$", "@". Diese Symbole werden dann als Symbol übermittelt.

Aus dem Stand der Technik sind Verfahren und Vorrichtungen zum Übertragen von Informationen von einem Sender zu einem Empfänger bekannt. Diese Verfahren und Vorrichtungen werden beispielsweise in Mobiltelefonen eingesetzt. Neben Sprachübertragungen sind auch die Übermittlung sogenannter SMS (short message service)-Kurzmitteilungen bekannt. Hierzu wird beispielsweise auf Connect 8/99 Seite 30 ff. verwiesen.

Demnach können über Mobiltelefone (Sender) Kurzmitteilungen über eine Kurzmitteilungszentrale eines Diensteanbieters an ein anderes Mobiltelefon (Empfänger) geschickt werden. Mittels derartiger Kurzmitteilungen lassen sich Sprachmitteilungen versenden.

Nachteilig bei den aus dem Stand der Technik bekanntgewordenen Mobiltelefonen, beziehungsweise bei den aus dem Stand der Technik bekanntgewordenen Verfahren und Vorrichtungen zum Übermitteln von Symbolen von einem Mobiltelefon zu einem anderen Mobiltelefon, ist es jedoch, dass die Symbole als solches übermittelt werden.

Dies erfordert bei der Übermittlung der Symbole und/oder Informationen eine erhebliche Datenmenge.

Dies wiederum hat eine erhebliche Zeit zur Folge, die für die Übermittlung der Symbole und/oder Informationen notwendig ist.

Weiterhin ist es nachteilig, dass im Stand der Technik nur eine begrenzte Anzahl von Symbolen und/oder Informationen übermittelt werden kann. Das liegt vor allem auch an der für die Symbole und/oder Informationenbenötigten erheblichen Datenmenge, die bei der Übermittlung der Symbole und/oder Informationenübermittelt werden muss.

Es besteht jedoch erheblicher Bedarf bei den Benutzern eines Mobiltelefons, auch andere Symbole und/oder Informationenübermitteln zu können, ohne dass ihre Telefonrechnung, das heisst ohne dass die Zeit, die zur Übermittlung der Symbole benötigt wird, über Gebühr ansteigt.

Nachteilig bei den bekannten Vorrichtungen und Verfahren zum Übermitteln von Audio-Informationen von einem Sender an einen Empfänger ist es, dass im Stand der Technik regelmässig die Audio-Information selbst, das heisst beispielsweise Tonsignale und dergleichen, von dem Sender an den Empfänger übermittelt werden.

Das bedeutet beispielsweise bei elektromagnetischer Übertragung, das heisst bei einer Übertragung mit Hilfe elektromagnetischer Wellen, wie sie beispielsweise bei Mobiltelefonen üblich ist, dass die Tonsignale selbst übertragen werden, das heisst in Modulationen der Übertragungsfrequenz umgewandelt und versandt werden. Daraus ergibt sich im Stand der Technik eine erhebliche Datenmenge, die bei der Übertragung von Tonsignalen erforderlich ist. So muss beispielsweise bei digitaler Übertragung jedes einzelne Tonsignal in eine Abfolge von Fehlenbit umgewandelt und anschliessend müssen diese Fehlenbitinformationen übertragen werden. Diese erforderlichen umfangreichen Datenmengen bedingen wiederum einen gewissen Zeitaufwand, der die Übertragung verlängert beziehungsweise verzögert.

Ferner ist bekannt, in Mobiltelefone Spielfunktionen zu integrieren. Hier wird beispielsweise auf Connect Heft 8/99 Seite 20 verwiesen. Diese Spielfunktionen sind auf einer Anzeigeeinrichtung des Mobiltelefons aufrufbar und von einem Bediener intern nutzbar.

Der nächstliegende Stand der Technik wird gebildet von US 5'784'001 (Deluca et al.) sowie von WO98/56197 (Telia AB). In US 5'784'001 ist ein Pager offenbart, welcher die Anzeige einer Anzahl vorher abgespeicherter Bilder auf einer begrenzten Anzahl Pager von einer zentralen Sendestelle aus gesteuert ermöglicht. Der Sender übermittelt einen Code, welcher einem auf dem Pager abgespeicherten Bild zugeordnet ist, und wenn diseer Code empfangen wir, so wird das entsprechende Bild zur Anzeige gebracht.

In WO98/56197 ist ein zelluläres Radio Kommunications-System, zu betreiben auf einem Radio Kommunikations Netzwerk, welches einen Short Message Service SMS einschliesst und daher auch das Versenden von Short Messages ermöglicht. Das System beinhaltet desweiteren eine Mehrzahl mobiler Telefonstationen und eine Anzahl von Basisstationen, wobei jeder verbunden ist mit einem öffentlichen Telefonnetzwerk. Mit eingeschlossen sind portable graphische Anzeigemittel, die adaptiert sind, ujm mit diesem Netzwerk zu kommunizieren, via mobiler Station, wobei bei Empfang einer SMS-Meldung ein graphisches und zuvor abgespeichertes Bild zur Anzeige gebracht wird, welchem Bild ein wahlweises zugeordnetes graphisches Bild mit geographischer Information zum angezeigten Bild überlappt wird. Das System wird benützt, um via SMS Informationen zu versenden, welche geographisch relevante Inhalte zu angezeigten geographischen Koordinaten beinhalten.
Mit keinem dieser System lässt sich jedoch auf einem ganz gewöhnlichen SMStauglichen Mobiltelefon, das auf irgendeinem Mobilfunknetz betrieben wird, ein Bild, eine Bildfolge, ein Ton oder eine Tonfolge oder irgendeine Kombination solcher Daten via SMS auf ein oder mehrere gezielt angewählt andere Mobiltelefone versenden und dort zur Anzeige und zum Abspielen bringen, indem diese Daten dort zuvor abgespeichert wurden. Vielmehr gibt es noch kein Mobiltelefon, welche es ermöglicht, beim Empfänger gezielt ein auf dem Sendertelefon ausgewähltes Bild, eine Bildfolge, ein Ton oder eine Tonfolge oder eine Kombionation derselben zur Anzeige und oder zum Abspielen zu bringen.
Es ist die Aufgabe der vorliegenden Erfindung, ein Verfahren und eine Vorrichtung zu schaffen, um genau dieses zu ermöglichen und daher Symbole mit geringerem Zeitaufwand zu übermitteln und eine erweiterte Informationsübertragung zu ermöglichen, was bisher nicht zur Verfügung stand.

Diese Aufgabe wird durch ein Verfahren mit den in Anspruch 1 genannten Merkmalen, sowie einem Mobiltelefon nach Anspruch 20 und einer Verwendung eines Mobiltelefons nach Anspruch 25 realisiert.

Die Vorteile dieser Vorgehensweise gemäss dieses Verfahrens liegen insbesondere darin, dass durch die Erfindung nunmehr die sprachlichen Ausdrücke von dem Sender zu dem Empfänger übermittelt werden müssen. Es muss daher beispielsweise dann, wenn von dem Benutzer einer Vorrichtung, die dieses Verfahren verwendet, das Symbol Sonne zum Versenden ausgewählt wird, nur noch das Wort "Sonne" übermittelt werden und nicht mehr das Symbol an sich. Die Übermittlung des Wortes "Sonne" verlangt jedoch erheblich weniger Sendezeit, so dass der Sendevorgang schneller und kostengünstiger abzuwickeln ist. Auf der Empfangsseite wird dann der sprachliche Ausdruck wiederum in das ihm zugeordnete Symbol umgewandelt, so dass der Empfänger der Nachricht dann auf seinem Display oder dergleichen ein Sonnensymbol sieht.

Bei einer bevorzugten Ausführungsform kann sendeseitig das bestimmte Symbol aus einer Tabelle von Symbolen ausgewählt werden. Dies kann beispielsweise mit Hilfe eines Displays geschehen. So kann beispielsweise der Benutzer eines Mobiltelefons auf dem Display aus einer ganzen Reihe beziehungsweise Tabelle von Symbolen ein bestimmtes Symbolauswählen, welches er versenden möchte. Das Mobiltelefon wird dann intern das ausgewählte Symbol in das entsprechende Wort beziehungsweise in den entsprechenden sprachlichen Ausdruck umwandeln und diesen sprachlichen Ausdruck versenden. Mit Hilfe einer derartigen Tabelle von Symbolen wird die Auswahl von Symbolen für den Benutzer erheblich vereinfacht. Bevorzugt werden die Symbole beziehungsweise wird die Tabelle von Symbolen zuvor in einem Speicher abgespeichert.

In einer weiteren bevorzugten Ausführungsform wird die Auswahl der Symbole und/oder die Zuordnung des sprachlichen Ausdrucks zu dem ausgewählten Symbol und/oder das Senden beziehungsweise Empfangen des sprachlichen Ausdrucks von einem Mikroprozessor gesteuert. Bevorzugt lässt sich somit das Verfahren mit einer Vorrichtung verwirklichen, die auf einer Platine integriert den Speicher zum Speichern der Tabelle von Symbolen und zugeordneten sprachlichen Ausdrücken, den Mikroprozessor und die Eingabeeinheit beziehungsweise Tastatur aufweist. Somit lässt sich das Verfahren vollständig in modernen Mobiltelefonen anwenden, da es keinerlei zusätzliche Vorkehrungen benötigt, die nicht in bekannte Mobiltelefone integrierbar wären. Das erfindungsgemässe Verfahren beziehungsweise die erfindungsgemässe Vorrichtung zum Übermitteln von Symbolen von einem Sender zu einem Empfänger lässt sich daher vollständig in heutigen Mobiltelefonen anwenden.

Weiter bevorzugt ist ein Verfahren, bei dem beim Absenden des sprachlichen Ausdrucks von dem Sender dem sprachlichen Ausdruck ein Kennzeichen hinzugefügt wird. Dieses Kennzeichen dient dazu, den sprachlichen Ausdruck von anderen sprachlichen Ausdrücken zu unterscheiden, die nicht ein Symbol darstellen. So wird beispielsweise beim Versenden des oben erwähnten Symbols Sonne zunächst das Symbol Sonne in das Wort "Sonne" umgewandelt und anschliessend mit einem Kennzeichen, beispielsweise mit dem Kennzeichen "#", versehen. Der derart mit dem Identifizierungsmittel "#" versehene sprachliche Ausdruck wird dann von der Sendeeinheit des Senders versandt. Empfangsseitig ist es aufgrund dieser Identifizierung von sprachlichen Ausdrücken möglich, normale sprachliche Ausdrücke von sprachlichen Ausdrücken zu unterscheiden, die ein Symbol verschlüsseln. Denn empfangsseitig ist es bei einer bevorzugten Ausführungsformmöglich zu erkennen, ob ein sprachlicher Ausdruck die Kennzeichnung, die ihn als verschlüsseltes Symbol kennzeichnet, aufweist oder nicht. Wenn der sprachliche Ausdruck keine Kennzeichnung aufweist, die ihn als verschlüsseltes Symbol kennzeichnet, wird er auf der Empfangsseite als der sprachliche Ausdruck an sich verarbeitet beziehungsweise dem Benutzer des empfangenden Mobiltelefons angezeigt. Handelt es sich jedoch um einen gekennzeichneten sprachlichen Ausdruck, so erkennt die Empfangseinheit, dass es sich um ein verschlüsseltes Symbol handelt und sucht bevorzugt in einer in einem Speicher abgelegten Tabelle das entsprechende zugeordnete Symbol. Sobald das Symbol empfangsseitig ermittelt wurde, kann das Symbol angezeigt werden. Der Benutzer auf der Empfangsseite merkt daher nicht, dass nur der sprachliche Ausdruck übermittelt wurde, sondern sieht direkt das Symbol und bekommt das Gefühl, dass das Symbol selbst übermittelt wurde.

Auch empfangsseitig kann das Verfahren mit Hilfe eines Mikroprozessors verwirklicht welcher das Abrufen der Tabellen von Symbolen und zugeordneten sprachlichen Ausdrücken aus dem Speicher steuert und welcher auch die Empfangseinheit des Empfängers und gegebenenfalls auch die Anzeigeeinheit zum Anzeigen des schliesslich ermittelten Symbols steuert.

Bei einer besonders bevorzugten Ausführungsform verarbeitet ein Mikroprozessor einen in einem Speicher abgelegten Algorithmus, wenn er ein Symbol in einen sprachlichen Ausdruck umwandeln soll. Somit wird bei dieser Ausführungsform keine Tabelle benötigt. Diese Zuordnung von sprachlichem Ausdruck zu Symbol kann auch empfangsseitig bei der Zuordnung eines Symbols zu dem sprachlichen Ausdruck mit Hilfe eines Algorithmus ausgeführt werden. Eine andere Ausführungsform der Erfindung weist die erfindungsgemässe Verschlüsselung nur einseitig auf. Das heisst, dass bei dieser Ausführungsform das Verfahren nur auf einer Seite, das heisst nur bei dem Empfänger oder nur bei dem Sender, das Symbol verschlüsselt beziehungsweise verschlüsselt wiedergibt. Das bedeutet, dass bei dieser Ausführungsform beim Senden beispielsweise von dem Benutzer nur der sprachliche Ausdruck eingegeben wird. Dabei kann der Benutzer bevorzugt diesen sprachlichen Ausdruck mit einem Kennzeichen versehen. Anschliessend wird der gekennzeichnete sprachliche Ausdruck von dem Sender an den Empfänger versandt. In diesem Fall ist dann nur der Empfänger in der Lage, den gekennzeichneten sprachlichen Ausdruck in das entsprechende Symbol umzuwandeln. Dies kann beispielsweise der Fall sein, wenn nur das empfangende Mobiltelefon mit entsprechenden Anzeigevorrichtungen ausgestattet ist, die eine Anzeige eines Symbols erlauben, während das sendende Mobiltelefon eine Symbolanzeige nicht ermöglicht.

Bei dem umgekehrten Fall ist es sendeseitig möglich, das Symbol in einen sprachlichen Ausdruck umzuwandeln, während es empfangsseitig nicht möglich ist. Somit wird in diesem umgekehrten Fall nur sendeseitig eine Umwandlung des ausgewählten Symbols in einen sprachlichen Ausdruck vorgenommen, während empfangsseitig einfach der sprachliche Ausdruck angezeigt wird. In dem eingangs genannten Beispiel wäre es somit so, dass der Benutzer des sendenden Mobiltelefons das Symbol Sonne auswählt, anschliessend gemäss dem erfindungsgemässen Verfahren das Symbol Sonne gemäss der Zuordnungstabelle in den sprachlichen Ausdruck "Sonne" umgewandelt und weiter anschliessend dieser sprachliche Ausdruck versandt wird. Auf der Empfangsseite wird dann, beispielsweise mangels Anzeigemöglichkeit für das Symbol "Sonne", dieser sprachliche Ausdruck selbst angezeigt.

In einer anderen Ausführungsform der Erfindung erkennt das erfindungsgemässe Verfahren beziehungsweise die erfindungsgemässe Vorrichtung vor der Verschlüsselung des ausgewählten Symbols, in welcher Sprache das ausgewählte Symbol verschlüsselt werden soll. Gegebenenfalls kann der Benutzer dies auch vorgeben. Bei Mobiltelefonen bedeutet dies dann beispielsweise, dass bei einem Mobiltelefon, welches sich im Besitz eines deutschsprachigen Benutzers befindet oder bei welchem von dem Benutzer die deutsche Sprache als Übertragungssprache vorgegeben wird, das Symbol Sonne als das Wort "Sonne" übermittelt wird. Handelt es sich jedoch bei dem Benutzer des Mobiltelefons um einen englischsprachigen Benutzer oder wird die englische Sprache von dem Benutzer gewählt, so wird das Symbol Sonne als der sprachliche Ausdruck "sun" übermittelt. Bei einer weiteren Ausführungsform sind in dem Speicher alle wichtigen Sprachen der Welt einprogrammiert. Das sendende Telefon sendet dann in der bei dem sendenden Telefon eingestellten Sprache, während das empfangende Telefon in den verschiedenen Tabellen, die im Speicher abgelegt sind, die gerade empfangene Sprache mittels des Mikroprozessors heraussucht und dann das von dem Sender ausgewählte Symbol anzeigt.

Bei einer weiteren Ausführungsform ist der Sender ein Telefon und der Empfänger ein Personalcomputer (PC) oder ein Faxgerät. Das gesendete Symbol wird dann von dem PC dargestellt oder von dem Fax ausgedruckt.

Erfindungsgemäss wird diese Aufgabe ferner durch ein Verfahren gelöst, bei dem sendeseitig wenigstens zwei zusammengehörige, nicht identische Symbole ausgewählt werden, zu jedem der zwei Symbole sendeseitig ein sprachlicher Ausdruck ermittelt wird, die den Symbolen zugeordneten sprachlichen Ausdrücke dem Empfänger gesendet werden und empfangsseitig die Folge der sprachlichen Ausdrücke in die zugeordneten Symbole gewandelt werden und die zugeordneten Symbole nacheinander auf einer Anzeigeeinrichtung angezeigt werden, wird es vorteilhaft möglich, in einfacher Weise von einem Sender zu wenigstens einem Empfänger bewegte Bilder zu übertragen. Die Folge der zueinander gehörenden, nicht identischen Symbole entsprechen vorzugsweise den einzelnen Bildsequenzen eines bewegten Bildes, so dass durch Aneinanderreihen von wenigstens zwei dieser Sequenzen (Symbole) eine Darstellung bewegter Bilder möglich ist. Vorzugsweise werden mehr als zwei Symbole ausgewählt und die entsprechenden sprachlichen Ausdrücke aneinander gereiht, so dass auch Bildfolgen mit entsprechend mehreren Sequenzen übertragbar und empfangsseitig darstellbar sind.

In bevorzugter Ausgestaltung der Erfindung ist vorgesehen, dass empfangsseitig die empfangenen Symbole (Bildsequenz) als Schleife wiederholt werden, so dass eine einmal gesendete Folge von Bildsequenzen empfangsseitig fortlaufend als bewegtes - sich in diesem Falle wiederholendes bewegtes - Bild dargestellt wird.

In bevorzugter Ausgestaltung der Erfindung ist vorgesehen, dass die einzelnen Symbole sendeseitig in einer abgespeicherten Tabelle aufrufbar sind und ein den Symbolen zugeordneter sprachlicher Ausdruck übermittelt wird. Durch die Übertragung von Bildsequenzen eines bewegten Bildes kann vorzugsweise vorgesehen sein, dass den einzelnen Symbolen, die zur Darstellung eines bewegten Bildes naturgemäss nur geringfügig unterschiedlich sind, ein gleicher sprachlicher Ausdruck zugeordnet ist, der sich nur in einer die jeweilige Abweichung der folgenden Bildsequenz zur vorhergehenden Bildsequenz kennzeichnenden Änderung, Zusatz oder dergleichen unterscheidet. Hierdurch wird der Aufwand zur Übertragung bewegter Bilder durch eine Folge von in sprachliche Ausdrücke gewandelte Bildsequenzen auf ein Minimum reduziert, da die zu übertragende Datenmenge erheblich reduziert ist.

Sendeseitig werden die empfangenen sprachlichen Ausdrücke durch eine in einem Speichermittel abgelegte Tabelle in die entsprechend zugehörigen Symbole gewandelt und auf der Anzeigeeinrichtung dargestellt.

Ferner ist in bevorzugter Ausgestaltung der Erfindung vorgesehen, dass bei einer übertragenen Folge von Symbole repräsentierenden sprachlichen Ausdrücken ein allgemeines Kennzeichen hinzugefügt wird, das für den Empfänger die Kurzmitteilung (in Folge der sprachlichen Ausdrücke) eindeutig als bewegte Bildinformation identifiziert. Hierdurch werden in einfacher Weise Unterscheidungen zwischen normalen beziehungsweise anderen Kurzmitteilungen und bewegten Bildinformationen möglich.

Erfindungsgemäss wird die Aufgabe weiterhin durch eine Vorrichtung gelöst, die daurch gekennzeichnet ist, dass sowohl dem Sender als auch dem wenigstens einen Empfänger ein Mikroprozessor, der mit wenigstens einem Speichermittel zusammenwirkt, zugeordnet sind, und in dem Speichermittel eine vorgebbare Anzahl von Symbolen mit ihren zugehörigen sprachlichen Ausdrücken abgelegt sind, und eine Anzeigeeinrichtung zum Anzeigen von wenigstens zwei der Symbole und eine Sende- und Empfangseinrichtung zum Übermitteln der wenigstens zwei Symbole vorgesehen sind, kann in vorteilhafter Weise die Handhabung zur Übermittlung bewegter Bilder vereinfacht werden. Durch einfachen Aufruf der gewünschten Symbole, die in dem Speichermittel abgelegt sind, kann eine Wandlung der Symbole in die sprachlichen Ausdrücke und deren Aufbereitung zum Senden durch den Mikroprozessor automatisch gesteuert werden, so dass die Übertragung vereinfacht ist.

Erfindungsgemäss wird die Aufgabe ferner durch ein Verfahren gelöst, bei welchem sendeseitig wenigstens zwei zusammengehörige, nicht identische Symbole ausgewählt werden, zu jedem der zwei Symbole sendeseitig eine Zeichenfolge ermittelt wird, die den Symbolen zugeordnete Zeichenfolgen dem Empfänger gesendet werden und empfangsseitig die Zeichenfolgen in die zugehörigen Symbole gewandelt werden und die Symbole nacheinander auf einer Anzeigeeinrichtung angezeigt werden und gleichzeitig wenigstens eine den Symbolen zugeordnete Tonfolge akustisch wiedergegeben wird, ist vorteilhaft möglich, neben einer sendeseitig ausgelösten empfangsseitigen Darstellung von bewegten Bildern gleichzeitig eine musikalische Untermalung auszulösen. Hierdurch kann der Empfänger entweder zusätzlich auf die übermittelten bewegten Bilder aufmerksam gemacht werden, indem auch bei einem momentan nicht sichtbaren Empfänger die musikalische Untermalung hörbar ist. Ferner kann hierdurch vorteilhaft erreicht werden, dass beim Empfänger der bewegten Bilder durch die musikalische Untermalung zusätzliche Emotionen, Erinnerungen, Gedanken oder dergleichen ausgelöst werden.

In bevorzugter Ausgestaltung der Erfindung ist vorgesehen, dass empfangsseitig die wenigstens eine den Symbolen zugeordnete Tonfolge fest zugeordnet ist. Hierdurch wird es möglich, die Übertragung der Informationen auf die Symbole, also die bewegten Bilder, zu begrenzen, wobei empfängerseitig eine den Symbolen zugeordnete Tonfolge automatisch wiedergegeben wird. Hierdurch wird ein Übertragungsaufwand für die zusätzliche Wiedergabe der Tonfolge nicht notwendig.

In weiterer bevorzugter Ausgestaltung der Erfindung ist vorgesehen, dass sendeseitig die empfangsseitig wiedergegebene Tonfolge beeinflussbar ist. Hierdurch wird vorteilhaft möglich, zusätzlich zu der Übertragung der in die Zeichenfolge gewandelten Symbole durch wenigstens ein Zeichen der übertragenen Zeichenfolge das empfangsseitige Wiedergeben einer bestimmten Tonfolge auszulösen. Bevorzugt sind empfangsseitig mehrere mögliche Tonfolgen abgespeichert, von denen durch die senderseitige Zeichenfolge wenigstens eine oder gegebenenfalls eine bestimmte Reihenfolge der möglichen Tonfolgen abrufbar sind.

Erfindungsgemäss wird die Aufgabe weiterhin durch eine Vorrichtung gelöst, die sich dadurch auszeichnet dass sowohl dem Sender als auch dem wenigstens einen Empfänger ein Mikroprozessor, der mit wenigstens einem Speichermittel zusammenwirkt, zugeordnet ist, und in dem Speichermittel eine vorgebbare Anzahl von Symbolen mit ihren zugehörigen Zeichenfolgen sowie den Symbolen zugeordnete Tonfolgen abgelegt sind, und eine Anzeigeeinrichtung zum Anzeigen von wenigstens zwei der Symbole sowie eine akustische Wiedergabeeinrichtung zum Wiedergeben der wenigstens einen Tonfolge und eine Sende- und Empfangseinrichtung zum Übermitteln der Zeichenfolgen vorgesehen sind, kann in vorteilhafter Weise die Übertragung bewegter Bilder sowie das Anzeigen der bewegten Bilder, gekoppelt mit einer gleichzeitigen Wiedergabe einer Tonfolge, durchgeführt werden. Insbesondere durch die empfangsseitige Abspeicherung der den übertragenen Zeichenfolgen zugeordneten Symbole sowie der hiermit verknüpften Tonfolgen lassen sich bei senderseitiger Auslösung in einfacher Weise die bewegten Bilder mit der dazugehörigen wenigstens einen Tonfolge wiedergeben. Die senderseitige Aufbereitung der zu übertragenden Symbole und/oder Tonfolgen sowie die empfangsseitige Wiedergabe der Symbole und Tonfolgen können durch die Mikroprozessoren automatisch gesteuert werden, so dass die Handhabung derartiger Vorrichtungen einfach ist und keiner zusätzlichen Schulung bedarf.

Die Aufgabe wird ferner durch ein Verfahren und eine Vorrichtung, bei denen sendeseitig eine Audio-Information in der Form mindestens eines diese Audio-Information darstellenden Zeichens ausgewählt wird, dass das mindestens eine Zeichen von dem Sender an den Empfänger übermittelt wird und dass auf der Seite des Empfängers das mindestens eine Zeichen in die Audio-Information umgewandelt wird. Die entsprechende Vorrichtung gemäss der Erfindung zeichnet sich dadurch aus, dass ein Speicher vorgesehen ist zum Speichern von Audio Information darstellenden Zeichen, dass ein Auswahlmittel vorgesehen ist, welches die Audio Information in der Form mindestens eines diese Audio Information darstellenden Zeichens aus dem Speicher auswählt und dass ein Sender vorgesehen ist zum Senden des die Audio-Information darstellenden mindestens einen Zeichens. Die Empfangsvorrichtung gemäss der Erfindung weist entsprechend einen Wandler zum Umwandeln der die Audio-Information darstellenden Zeichen in Tonsignale auf. Diese Tonsignale werden bei einer bevorzugten Ausführungsform von einem Lautsprecher oder dergleichen wiedergegeben.

Eine weitere bevorzugte Ausführungsform der Erfindung zeichnet sich dadurch aus, dass es sich bei der Audio-Information um mindestens einen Ton handelt. Diese Audio-Information wird dann bei einer weiter bevorzugten Ausführungsform eines diesen Ton darstellenden Buchstabens beziehungsweise einer diesen Ton darstellenden Note ausgewählt. Bei der erfindungsgemässen Vorrichtung werden zu diesem Zweck die Audio Informationen, das heisst in dieser Ausführungsform die die Audio-Information bildenden Buchstaben beziehungsweise Noten, in dem Speicher abgelegt. Aus diesem Speicher können sie dann mit Hilfe geeigneter Auswahlmittel, beispielsweise einem Touch-Screen oder einer normalen Tastatur, welcher Touch-Screen oder welche Tastatur mit einem Mikroprozessor verbunden ist, welcher Mikroprozessor den Speicher ansteuert, ausgewählt werden. Die Zeichen können dann in einer bevorzugten Ausführungsform von einer Sendeeinrichtung, die bevorzugt eine Antenne zum Senden von elektromagnetischen Wellen aufweist, an eine Empfangseinrichtung übermittelt werden. Die Empfangseinrichtung weist bevorzugt einen Speicher auf, in dem sich eine Tabelle befindet, die die Audio Information darstellenden Zeichen, in diesem Falle die Buchstaben beziehungsweise Noten, den entsprechenden Tonsignalen zuordnen kann. Diese mit Hilfe eines empfangsseitig vorgesehenen Mikroprozessors zugeordneten Tonsignale können dann erfindungsgemäss durch einen Lautsprecher oder dergleichen als Tonsignal wiedergegeben werden.

Eine weitere bevorzugte Ausführungsform weist einen Speicher auf, in welchem ganze Melodien sendeseitig und/oder empfangsseitig abgespeichert sind. Diese Melodien können ebenfalls mit Hilfe von diese Melodien darstellenden Zeichen sendeseitig ausgewählt werden und an den Empfänger durch Übermittlung des die entsprechende Melodie darstellenden Zeichens übermittelt werden. Der Empfänger kann dann mit Hilfe der identischen Tabelle, die ebenfalls in einem Speicher abgelegt sein kann, die entsprechenden Melodien aufgrund des empfangenen Zeichens auffinden und/oder wiedergeben.

Besonders vorteilhaft lässt sich das erfindungsgemässe Verfahren beziehungsweise lassen sich die erfindungsgemässen Vorrichtungen zum Senden und zum Empfangen von Audio-Information von einem Sender an einen Empfänger bei einem Mobiltelefon, einem sogenannten Handy, verwenden. Bei derartigen Mobiltelefonen wird dann über die Tastatur ein ein Tonsignal oder eine Melodie darstellendes Zeichen aus dem Speicher des Handys ausgewählt und durch entsprechenden Tastendruck abgesandt. Das empfangende Handy weist dann eine entsprechende Tabelle zur Umwandlung des abgesandten Zeichens, welches eine Audio-Information darstellt, in die entsprechende Audio-Information, das heisst beispielsweise ein Tonsignal oder eine Melodie, auf. Mit Hilfe eines in dem Empfangshandy vorgesehenen Mikroprozessors kann dann die mit Hilfe der entsprechenden Tabelle aufgefundene Melodie automatisch oder auf Wunsch des Benutzers des Empfangshandys über den Lautsprecher des Handys wiedergegeben werden. Somit lassen sich mit Hilfe dieser Erfindung durch Mobiltelefone auch kleine Musikstücke und dergleichen als Gruss verschicken, ohne dass die Sendezeit über Gebühr verlängert wird.

Besonders bevorzugt wird die Erfindung in Kombination mit der bekannten SMS-Nachricht verwendet. Auf diese Weise ist es möglich, beispielsweise durch Anhängen einer entsprechenden Kennung an normale Buchstaben, diese Buchstaben als verschlüsselte Töne zu kennzeichnen. Somit kann dann auf der Empfangsseite, beispielsweise bei einem empfangenden Handy einer solchen mit einem besonderen Kennzeichen versehenen SMS-Nachricht erkannt werden, dass es sich eigentlich um ein Tonsignal handelt. Bei entsprechender Ausrüstung des Empfangshandys, welche Ausrüstung die Erkennung des Kennzeichens und die Umwandlung des so gekennzeichneten Buchstabens in ein Tonsignal umfasst, lässt sich dann empfangsseitig das entsprechende Tonsignal über den Lautsprecher des Empfangshandys nach Empfang dieser neuartigen SMS-Nachricht wiedergeben.

Erfindungsgemäss wird die Aufgabe ferner durch ein Verfahren gelöst, bei dem sendeseitig aus einer vorgebbaren Anzahl von unterschiedlichen Spielen wenigstens ein Spiel aktiviert wird, das aktivierte Spiel auf einer Anzeigeeinrichtung des Senders mit einerzugehörigen Spielmaske angezeigt wird, von einer Bedienperson eine gewünschte Spielaktion ausgewählt wird, die gewünschte Spielaktion vom Sender zu dem Empfänger gesendet wird, empfangsseitig die sendeseitig gewünschte Spielaktion auf einer Anzeigeeinrichtung des Empfängers angezeigt wird, indem eine dem Spielzugehörige Spielmaske aktiviert wird und die sendeseitig gewünschte Spielaktion in der Spielmaske visualisiert wird, ist vorteilhaftmöglich, auch über beliebig grosse Entfernungen Spiele mit wenigstens zwei Spielern durchzuführen. Somit ergeben sich völlig neue Anwendungsgebiete. Darüber hinaus ist durch die Einbeziehung von mehreren Spielern der Unterhaltungswert verbessert.

In bevorzugter Ausgestaltung der Erfindung ist vorgesehen, dass die gewünschte Spielaktion sendeseitig über eine vorzugsweise als alphanumerische Tastatur ausgebildete Bedieneinrichtung eingegeben wird und als Kurzmitteilung dem Sender übermittelt wird. Hierdurch wird die zu übertragende Datenmenge für die Durchführung des Spieles auf ein Minimum reduziert.

Ferner ist in bevorzugter Ausgestaltung der Erfindung vorgesehen, dass bei einer übertragenen Spielaktion ein Kennzeichen hinzugefügt wird, das für den Empfänger die Kurzmitteilung eindeutig als Spielaktion identifiziert. Hierdurch werden in einfacher Weise Unterscheidungen zwischen normalen beziehungsweise weiteren Kurzmitteilungen und Spielinformationen möglich.

In weiterer bevorzugter Ausgestaltung der Erfindung ist vorgesehen, dass sendeseitig ein Spielwunsch einer einer Dienstezentrale zugeordneten Vermittlungsagentur übermittelt wird und diese Vermittlungsagentur aus einem dort vorhandenen Pool spielwilliger Empfänger wenigstens einen der Empfänger zur Aufnahme des Spiels vermittelt. Hierdurch wird es für eine sendeseitige Bedienperson möglich, jederzeit, unabhängig von einem bekannten Mitspieler, einen Spielwunsch zu äussern und mit wenigstens einem über die Verbindungsagentur zugeordneten Mitspieler das Spiel aufzunehmen.

Bevorzugt kann ferner vorgesehen sein, dass über die Vermittlungsagentur als Empfänger ein Spielcomputer, beispielsweise ein Schachcomputer, vermittelt wird. Hierdurch wird es für einen Sender auch möglich, ein Spiel - mit dem Spielcomputer - aufzunehmen, wenn gerade kein normaler Empfänger spielbereit ist.

Ferner ist in bevorzugter Ausgestaltung der Erfindung vorgesehen, dass über die dem Diensteanbieter zugeordnete Vermittlungsagentur eine Verbindung zu mehreren Empfängern gleichzeitig hergestellt wird, so dass quasi nach Art einer Konferenzschaltung auch Spiele mit mehr als zwei Mitspielern möglich sind. Hierbei kann je nach Art des aktivierten Spiels entweder jeder gegen jeden, beispielsweise bei dem Spiel "Pachisi®;", spielen oder ein Spieler gegen mehrere Spieler einzeln spielen, beispielsweise Simultanschach.

Erfindungsgemäss wird die Aufgabe weiterhin durch eine Vorrichtung gelöst, bei welcher sowohl dem Sender als auch dem Empfänger ein Mikroprozessor zugeordnet ist, der mit einem Speichermittel verbunden ist, in dem wenigstens die Spielmaske eines Spiels abgelegt ist, kann in vorteilhafter Weise durch den Mikroprozessor die Spielmaske des wenigstens einen Spiels aufgerufen und auf der Anzeigeeinrichtung des Senders angezeigt werden. Gleichzeitig kann mittels des Mikroprozessors bei Anzeige einer Spielmaske auf der Anzeigeeinrichtung die alphanumerische Bedieneinrichtung des Senders auf "Spielbetrieb" umgeschaltet werden, so dass ein vereinfachtes Senden der gewünschten Spielaktionen möglich wird. Gleichzeitig können die erfolgten Spielaktionen und die erfolgten Spielreaktionen des Gegenspielers in dem Speichermittel abgespeichert werden, so dass ein laufendes Spiel jederzeit unterbrochen werden kann, ohne dass die bisherigen Spielaktionen verloren sind. Insofern kann ein Spiel zwischen wenigstens zwei Spielpartnern auch über einen längeren Zeitpunkt von beispielsweise Tagen, Wochen, Monaten oder dergleichen erfolgen. Das Speichermittel ist so ausgebildet, dass auch bei unterbrochener Energiezufuhr ein Speicherinhalt nicht verloren geht.

Ferner ist in bevorzugter Ausgestaltung der Erfindung vorgesehen, dass von dem in dem Sender zugeordneten Speichermittel eine Spielmaske wenigstens eines Spiels auf Anforderung dem Empfänger übermittelt wird. Somit wird vorteilhaft auch eine Spielaufnahme mit einem Empfänger möglich, dessen Empfangsgerät nicht über die notwendige Spielmaske zur Durchführung des Spiels verfügt.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen näher erläutert. Es zeigen:
- Figur 1: schematisch ein erfindungsgemässes Mobiltelefon zum Senden, Verschlüsseln und/oder Empfangen von Symbolen;
- Figuren 2 bis 26: verschiedene mit Hilfe des erfindungsgemässen Verfahrens übermittelbare Symbole;
- Figur 27: schematisch die Ansicht eines Senders und/oder Empfängers zum Übermitteln von Informationen;
- Figur 28: ein Blockschaltbild zum Senden bewegter Bilder;
- Figur 29: ein Blockschaltbild zum Empfangen bewegter Bilder;
- Figuren 30 bis 35: schematisch verschiedene Möglichkeiten von zu sendenden bewegten Bildern;
- Figur 36: schematisch die Ansicht eines Senders und eines Empfängers zum Übermitteln von Informationen;
- Figur 37: ein Blockschaltbild zum Senden bewegter Bilder mit Tonfolgen;
- Figur 38: ein Blockschaltbild zum Empfangen bewegter Bilder mit Tonfolgen;
- Figuren 39 und 40: schematisch weitere Möglichkeiten von zu sendenden bewegten Bildern mit Tonfolgen;
- Figur 41: schematisch den Ablauf des erfindungsgemässen Verfahrens gemäss einer Ausführungsform der Erfindung anhand eines schematisch dargestellten Ausführungsbeispiels einer erfindungsgemässen Vorrichtung;
- Figur 42: schematisch eine Anordnung zum Übermitteln von Spielinformationen von einem Sender zu einem Empfänger;
- Figur 43: eine Anordnung zum Übermitteln von Spielinformationen von einem Sender zu wenigstens einem aus einer Vielzahl von Empfängern ausgewählten Empfänger und
- Figur 44: schematisch die Ansicht eines Senders oder Empfängers zum Übermitteln von Spielinformationen.

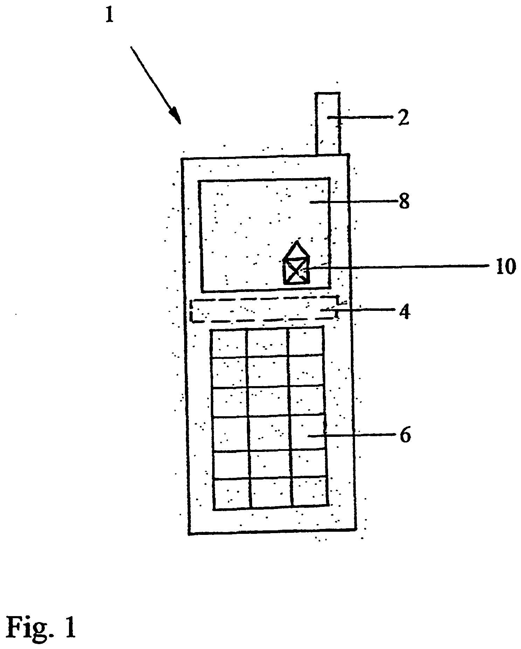

Figur 1 zeigt ein Mobiltelefon 1. Das Mobiltelefon1 weist eine nicht dargestellte Sendeeinheit mit einer Antenne 2 auf. Die Antenne dient sowohl als Sendeantenne für die Sendeeinheit als auch als Empfangsantenne für die ebenfalls nicht dargestellte Empfangseinheit.

Weiterhin weist das Mobiltelefon 1 eine nicht dargestellte Batterie, einen nicht dargestellte Mikroprozessor und einen schematisch dargestellten Speicher 4 auf. Die Batterie versorgt das Mobiltelefon 1 mit Energie. Der Mikroprozessor dient zur Steuerung des Mobiltelefons 1 und seiner Komponenten.

Weiterhin zeigt das Mobiltelefon 1 eine als Eingabeeinheit dienende Tastatur 6. Mit Hilfe der Tastatur 6 lässt sich der Mikroprozessor derart aktivieren, dass ein mit Hilfe der Tastatur 6 ausgewähltes Symbol von dem Mikroprozessor aus dem Speicher 4 abgerufen und auf einer Anzeige 8 dargestellt wird. In dem in der Figur 1 dargestellten Beispiel zeigt das Mobiltelefon 1 auf der Anzeige 8 als Symbol 10 ein Haus. Bei der Anzeige 8 handelt es sich um eine Flüssigkristallanzeige. Andere Anzeigeformen sind jedoch dem Fachmann geläufig. Durch die Tastatur 6 lässt sich nun von dem Benutzer der Befehl an den Mikroprozessor eingeben, dass das angezeigte Symbol 10 von dem Mobiltelefon 1 mit Hilfe der Sendeeinheit und der Sendeantenne 2 an ein anderes, nicht dargestelltes Mobiltelefon verschickt werden soll. Zu diesem Zweck wird dann automatisch von dem Mikroprozessor gesteuert das Symbol 10, in diesem Fall ein Haus, anhand einer in dem Speicher 4 abgelegten Übersetzungstabelle in den sprachlichen Ausdruck "Haus" übersetzt. Dann wird dem sprachlichen Ausdruck "Haus" ein Kennzeichen, beispielsweise das Zeichen "#", hinzugefügt. Wiederum anschliessend wird von dem Mikroprozessor gesteuert der so gebildete Ausdruck "Haus#" an die Sendeeinheit übergeben. Diese Sendeeinheit sendet dann mit Hilfe der Sendeantenne 2 den Begriff "Haus#" an das andere Mobiltelefon.

Bei dem anderen Mobiltelefon wird mit Hilfe einer Empfangsantenne der Begriff "Haus#" empfangen, von einer Empfangseinheit übernommen, von der Empfangseinheit an einen Mikroprozessor weitergegeben, von dem Mikroprozessor gesteuert, anhand einer in dem anderen Mobiltelefon abgespeicherten Tabelle einem bestimmten Symbol zugeordnet und das derart aufgefundene Symbol auf einer Anzeige des anderen Mobiltelefons zur Anzeige gebracht. Somit bekommt der Benutzer des anderen Mobiltelefons das Gefühl, dass er das Symbol Haus übermittelt bekommen hat.

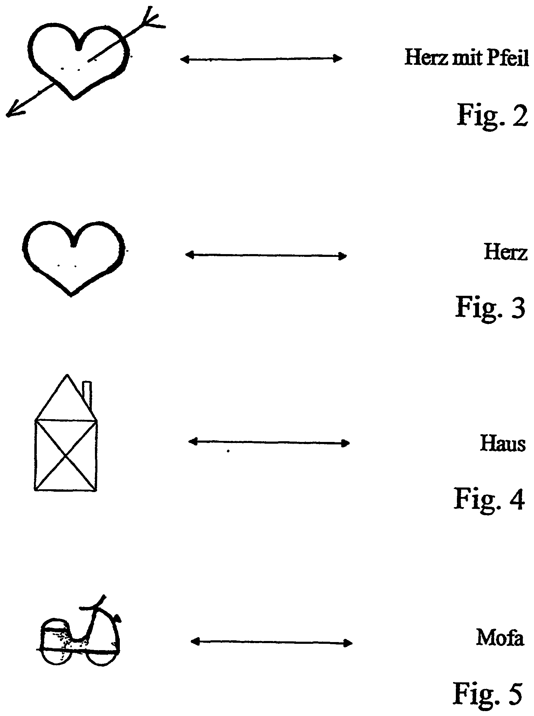

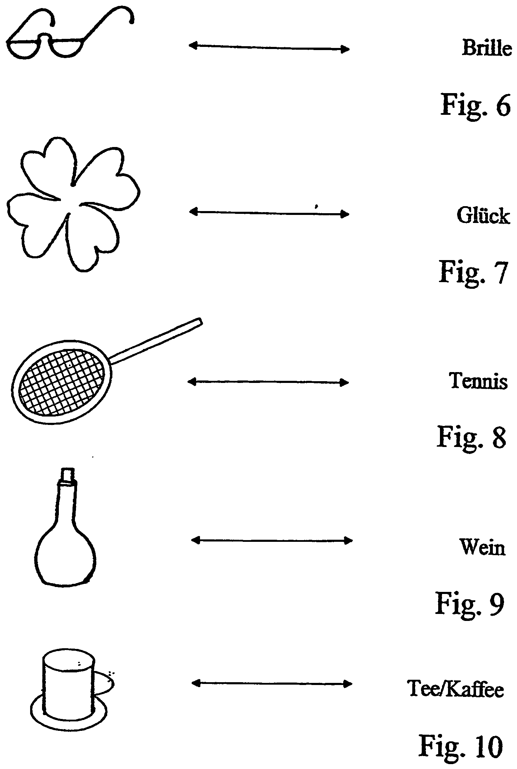

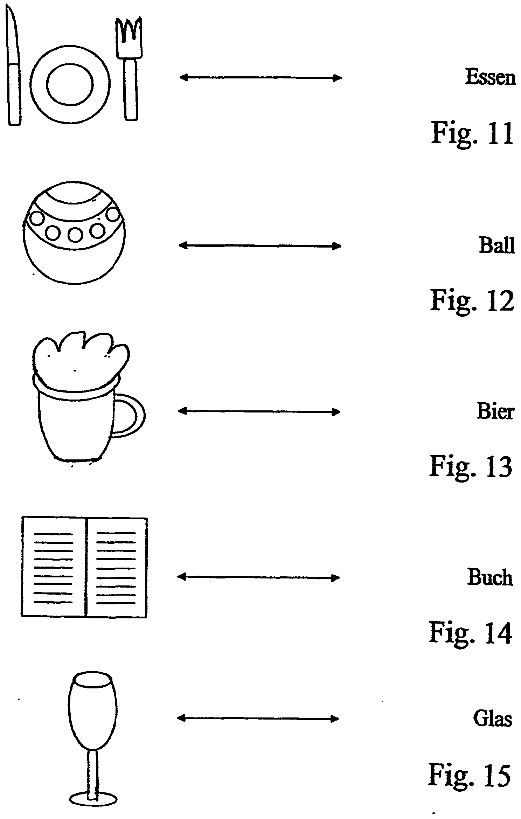

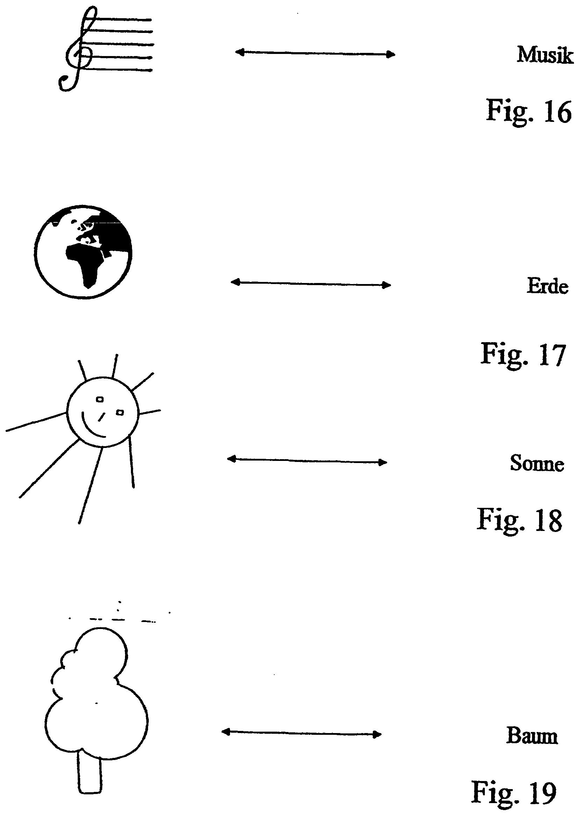

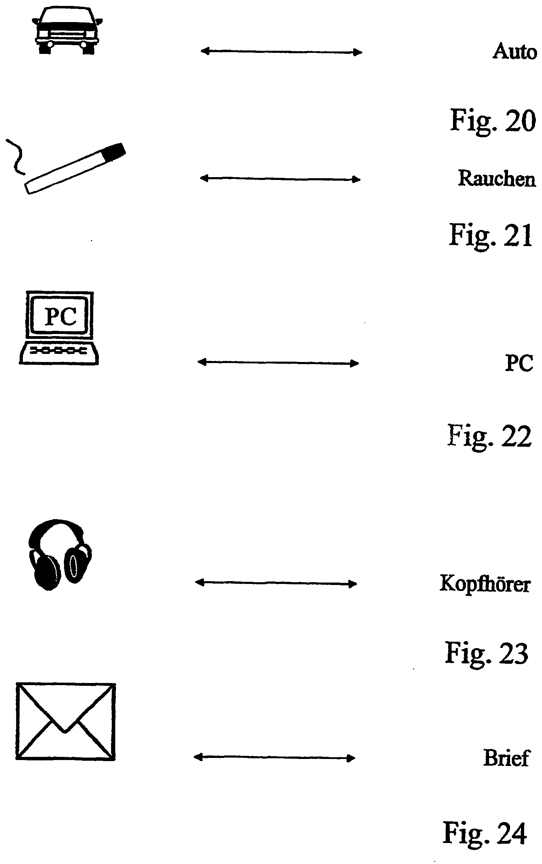

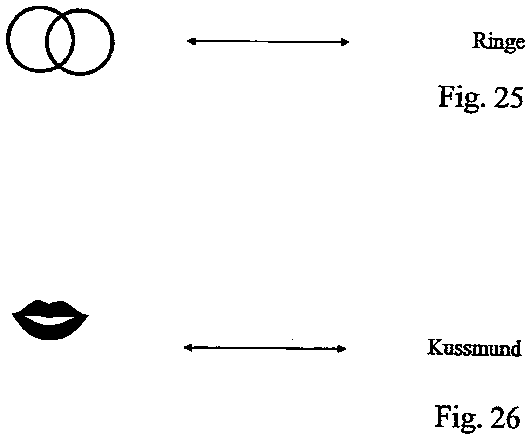

Die Figuren 2 bis 26 zeigen Beispiele von mittels des erfindungsgemässen Verfahrens übermittelbaren Symbolen. In den Figuren sind links jeweils die aus wählbaren und zu übermittelnden Symbole dargestellt, während rechts die jeweils zugeordneten sprachlichen Ausdrücke gezeigt sind. Eine der oben genannten Tabellen enthält beispielsweise alle in den Figuren gezeigten Symbole und die entsprechenden zugeordneten Ausdrücke. Vor dem Senden wird das jeweilige Symbol in den Ausdruckübersetzt.

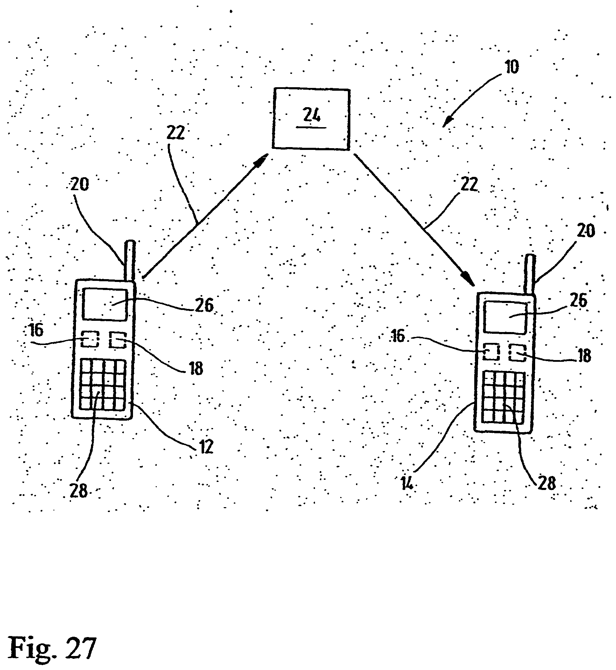

Figur 27 zeigt schematisch eine Anordnung 10 zum Übermitteln von bewegten Bildern von einem Sender 12 zu einem Empfänger 14. Sender 12 und/oder Empfänger 14 können beispielsweise Mobiltelefone, PCs, Telefaxgeräte, Communicator, Laptops, Notebooks oder dergleichen sein. Denkbar sind auch an Telekommunikationsanlagen angeschlossene Endgeräte (Telefone), die über ein entsprechendes noch zu erläuterndes Display verfügen. Bei den nachfolgenden Ausführungsbeispielen wird davon ausgegangen, dass es sich bei Sender 12 und Empfänger 14 jeweils um ein Mobiltelefon handelt, wobei jedoch die Funktionen auf die anderen genannten Geräte ohne Weiteres übertragbar sind und im Schutzumfange der Erfindung liegen.

Zunächst wird davon ausgegangen, dass eine Bedienperson des Senders 12 einer sich im Besitz des Empfängers 14 befindenden Person eine bewegte Bildinformation senden möchte. Die Bedienperson des Senders 12 ruft hierzu in später noch zu erläuternder Weise aus einem Speichermittel 16 eine Abfolge von Bildsequenzen (später auch Symbole genannt), die in zeitlich versetzter Darstellung ein bewegtes Bild ergeben, auf. Diese Folge von wenigstens zwei zusammen gehörigen, nicht identischen Symbolen werden mittels eines Mikroprozessors 18 aufbereitet und über eine Sende- und Empfangseinrichtung 20 als Kurzmitteilung 22 einem Diensteanbieter 24 übermittelt. Diensteanbieter 24 sind beispielsweise Betreiber von Mobilfunksystemen, wie beispielsweise C-Netze, D-Netze, E Netze oder dergleichen. Das Senden einer Kurzmitteilung 22 über einen Diensteanbieter 24 zu einem ausgewählten Empfänger 14 ist allgemein bekannt, so dass im Rahmen der vorliegenden Beschreibung hierauf nicht näher eingegangen werden soll.

Über den Diensteanbieter 24 wird die die Folge der Bildsequenzen repräsentierende Kurzmitteilung 22 dem Empfänger 14 übermittelt. Der Empfänger 14 erkennt - in ebenfalls noch zu erläuternder Weise - dass es sich bei der Kurzmitteilung 22 um die Darstellung bewegter Bilder handelt. Bei Aufruf der Kurzmitteilung 22 durch den Empfänger 14, was notwendigerweise nicht sofort, sondern auch zu einem späteren Zeitpunkt erfolgen kann, wird durch Erkennen der Bildfolge durch den Empfänger 14 durch einen ebenfalls vorgesehenen Mikroprozessor 18, der mit einem Speichermittel 16 zusammenwirkt, auf einer Anzeigeeinrichtung 26 die entsprechende Anzahl der Bildsequenzen zeitlich aufeinander folgend dargestellt, so dass für den Betrachter ein bewegtes Bild entsteht.

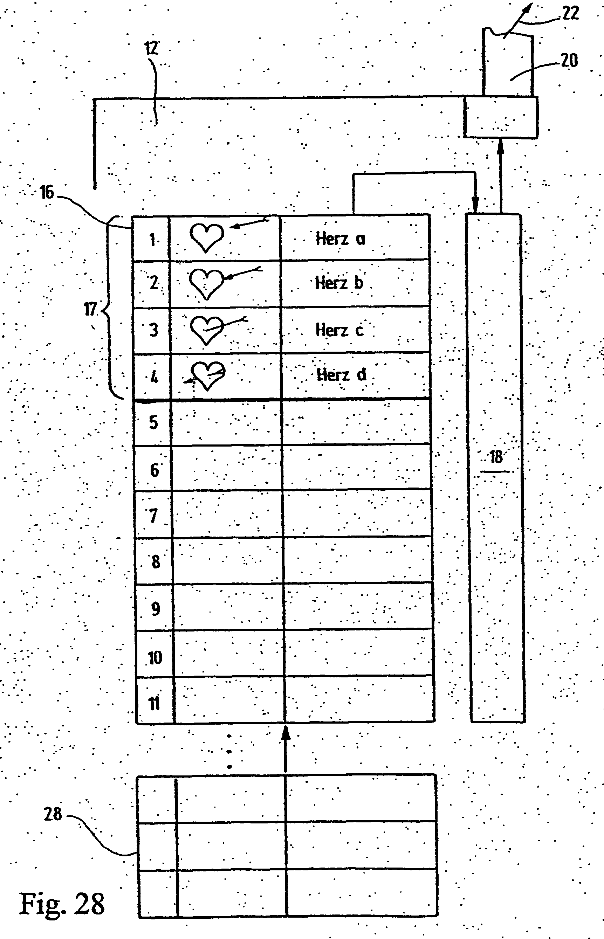

Figur 28 verdeutlicht in schematischer Blockschaltbilddarstellung das Senden bewegter Bilder. Gleiche Teile wie in Figur 27 sind mit gleichen Bezugszeichen versehen und nicht nochmals erläutert. Über eine Bedieneinrichtung 28, die beispielsweise von einer alphanumerischen Tastatur gebildet ist, können auf der Anzeigeeinrichtung 26 die bestehenden Möglichkeiten des Sendens von bewegten Bildern dargestellt werden. Diese Darstellung kann beispielsweise menügeführt erfolgen, indem durch Betätigen entsprechender Tasten der Bedieneinrichtung 28 die bestehenden Möglichkeiten einzeln, nacheinander oder zusammenhängend dargestellt werden. Bei dem erläuterten Ausführungsbeispiel wird davon ausgegangen, dass als bewegtes Bild ein sich einem Herz nähernder Pfeil übertragen werden soll. Dieses bewegte Bild ist beispielsweise in vier Bildsequenzen zerlegt, die im Speichermittel 16 unter Ordnungsnummer "1", "2", "3" und "4" abgelegt sind. Die einzelnen Bildsequenzen jeweils für sich betrachtet stellen eine Phase des Anfluges des Pfeiles auf das Herz dar. Jeder der Bildsequenzen, die quasi einem Bildsymbol entspricht, ist ein sprachlicher Ausdruck zugeordnet. Diese Zuordnung ist beispielsweise in der schematisch dargestellten tabellarischen Form im Speichermittel 16 abgelegt. Der Bildsequenz "1" ist beispielsweise der sprachliche Ausdruck "Herza" zugeordnet. Der Bildsequenz "2" ist der sprachliche Ausdruck "Herzb", der Bildsequenz "3"der sprachliche Ausdruck "Herzc" und der Bildsequenz "4" der sprachliche Ausdruck "Herzd" zugeordnet. Soll nunmehr vom Sender 12 dieser das Herz anfliegende Pfeil als bewegtes Bild einem Empfänger 14 übertragen werden, wird über den Mikroprozessor 18 die Sende- und Empfangseinheit 20 derart angesteuert, dass als Kurzmitteilung die Folge "HerzaHerzbHerzcHerzd" gesendet wird.

Empfängerseitig wird diese Kurzmitteilung von der dort vorhandenen Sende- und Empfangseinrichtung 20 dem dortigen Mikroprozessor 18 übermittelt, der durch Einlesen in dem dort ebenfalls vorhandenen Speichermittel 16 das zugehörige Bildsymbol (Bildsequenz) ermittelt. Durch Ansteuerung der Anzeigeeinrichtung 26 beim Empfänger 14 kann dann zeitlich aufeinander folgend die Darstellung der Bildsequenzen "1", "2", "3" und "4" erfolgen. Für den Betrachter der empfängerseitigen Anzeigeeinrichtung 20 ergibt sich somit als bewegliches Bild der anfliegende Pfeil auf das Herz.

Zur Vereinfachung der Übertragung kann vorgesehen sein, dass bei Auswahl der Ordnungsnummer "1" im Sender 12 automatisch alle zu einem Block 17 gehörenden Bildsequenzen, beispielsweise die Bildsequenzen mit den Ordnungsnummern "1", "2", "3" und "4", aufgerufen und zum Empfänger 14 gesendet werden.

Um eine zu übertragende Datenmenge weiter zu reduzieren, kann vorgesehen sein, dass bei Aufrufen der Ordnungsziffern "1", "2", "3" und "4" über den Mikroprozessor 18 automatisch erkannt wird, dass vier aufeinander folgende zusammengehörende (zu einem Block 17 gehörende), an sich lediglich geringfügig unterschiedliche Bildsymbole (Bildsequenzen) übertragen werden sollen. Hieraus kann als Kurzmitteilung dann eine verkürzte Mitteilung derart erfolgen, dass lediglich die Kurzmitteilung lautet "Herzabcd". Die Kurzmitteilung besteht somit aus einem die gesamte Bildfolge kennzeichnenden Stamm "Herz" und den einzelnen Bildsequenzen entsprechenden Zuordnungen "abcd". Es wird deutlich, dass diese zu übertragende Kurzmitteilung 22 weniger Daten benötigt als die oben erwähnte Aneinanderreihung der einzelnen Bildsequenzen mit ihren kompletten sprachlichen Ausdrücken. Empfängerseitig erfolgt dann über den dort vorgesehenen Mikroprozessor 18 eine entsprechende Rückwandlung und Darstellung auf der Anzeigeeinrichtung 26.

Um die Kurzmitteilung 22 für den Empfänger als Übermittlung zusammengehörender Bildsequenzen zu kennzeichnen, kann zusätzlich eine Kennzeichnung, beispielsweise mit der Taste "#" erfolgen, so dass die Kurzmitteilung dann aus der Zeichenfolge nach Variante1 "HerzaHerzbHerzcHerzd#" oder nach der bevorzugten Kurzvariante 2 "Herzabcd#" besteht.

Selbstverständlich ist es für den Sender 12 auch möglich, aus einem zusammengehörenden Block von Bildsequenzen auch nur einzelne, beispielsweise zwei Bildsequenzen auszuwählen, die dann als Kurzmitteilung übertragen werden. Beispielsweise kann aus dem Block der Ordnungsnummern "1","2","3" und "4"die Ordnungsnummer "2" und "4" ausgewählt werden, so dass als Kurzmitteilung dann entweder "HerzbHerzd#" oder "Herzbd#" übermittelt wird. Entsprechend einer tatsächlich vorhandenen Anzahl von zusammengehörenden Bildsequenzen ergeben sich hierdurch unterschiedliche Möglichkeiten der Übertragung aus mehreren einzelnen Bildsequenzen bestehender bewegter Bilder.

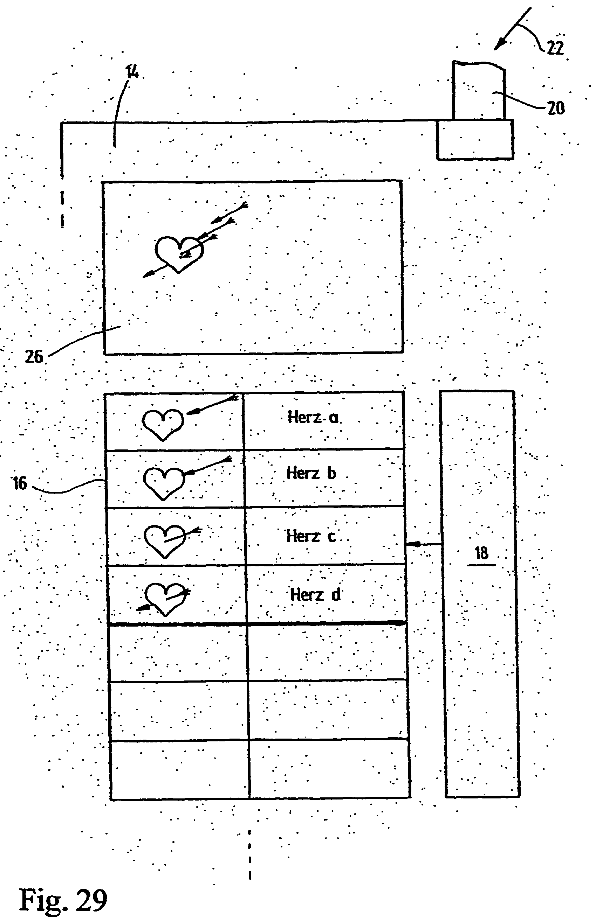

Figur 29 verdeutlicht nochmals schematisch den Empfang der Kurzmitteilung 22 beim Empfänger 14. Durch die Sende- und Empfangseinrichtung 20 erhält der Mikroprozessor 18 die Kurzmitteilung 22 und übermittelt diese der Speichereinheit 16. Durch die eindeutige Zuordnung der sprachlichen Ausdrücke zu den Bildsequenzen lässt sich entsprechend der empfangenen Kurzmitteilung 22 auf der Anzeigeeinrichtung 26 die zeitliche Abfolge der einzelnen Bildsequenzen darstellen. Bei dem gewählten Beispiel ist das "Herz" als konstanter identischer Bildteil nur einmal darzustellen, während der anfliegende "Pfeil" in seinen vier Flugphasen entsprechend den Ordnungsnummern "1", "2", "3" und "4", die sendeseitig vergeben sind, alternierend dargestellt wird. In der Anzeigeeinrichtung 26 in Figur 29 sind schematisch die vier Flugphasen des Pfeiles angedeutet, die selbstverständlich nacheinander dargestellt werden. Für den Betrachter der Anzeigeeinrichtung 26 ergibt sich dadurch der dem Herz sich nähernde Pfeil. Die Mikroprozessorschaltung 18 kann eine entsprechende Schleifenschaltung aufweisen, wonach die als Kurzmitteilung 22 übermittelten und über die Speichereinheit 16 in die Bildsequenzen gewandelten Symbole fortlaufend wiederholend dargestellt werden. Dies kann erfolgen, bis von einer Bedienperson am Empfänger 14 die Darstellung der bewegten Bildinformation unterbrochen beziehungsweise abgebrochen wird.

Das empfängerseitige Aufrufen der Kurzmitteilung 22 und somit das Darstellen der bewegten Bilder kann entweder sofort nach Empfang der Kurzmitteilung 22 oder auch später erfolgen. Hierzu erfolgt eine entsprechende Zwischenspeicherung, bis von der Bedienperson des Empfängers 14 das Abrufen erfolgt.

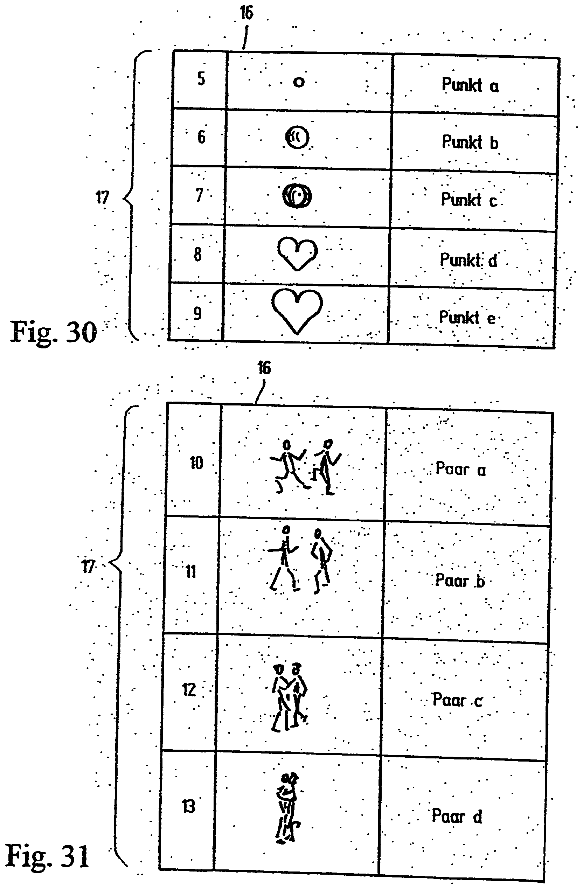

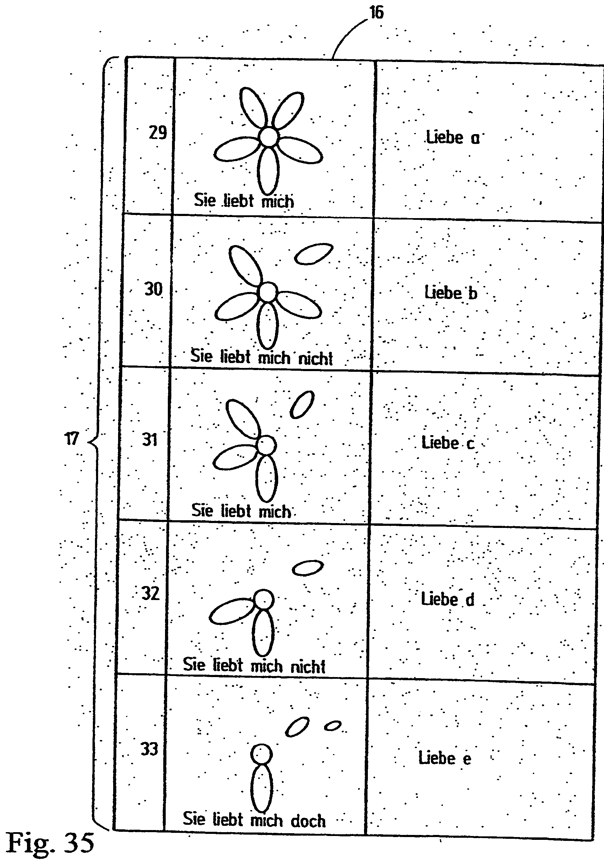

In den Figuren 30 bis 35 sind weitere Ausführungsbeispiele dargestellt, die unterschiedliche Bildsequenzen für die Übertragung von bewegten Bildern betreffen. Dargestellt ist jeweils schematisch das Speichermittel 16, wobei zusammengehörende Bildsequenzen jeweils in einem Block 17 mit den zughörigen Ordnungsnummern gezeigt sind. Hinsichtlich des Aufrufes und Sendens der in den Figuren 30 und 35 beispielhaft dargestellten Bildsequenzen wird auf die Beschreibung zu den Figuren 27 bis 29 verwiesen.

Gemäss Figur 30 kann vorgesehen sein, dass ein bewegtes Bild darin besteht, dass aus einem Punkt ein sich vergrösserndes Herz entsteht. Die einzelnen mit den Ordnungsnummern "5", "6", "7", "8" und "9" bezeichneten Bildsequenzen können die sprachlichen Ausdrücke "Punkta", "Punktb", "Punkte", "Punktd" und "Punkte" zugeordnet bekommen. Die Übertragung kann dann wiederum entweder aus einer Aneinanderreihung der sprachlichen Ausdrücke, beispielweise "PunktaPunktbPunktcPunktdPunkte#" oder gemäss der Kurzvariante "Punktabcde#" erfolgen.

Figur 31 zeigt als Ausführungsbeispiel ein sich näherndes Paar, das aus insgesamt vier mit den Ordnungsnummern "10", "11", "12", "13" bezeichneten Bildsequenzen besteht.

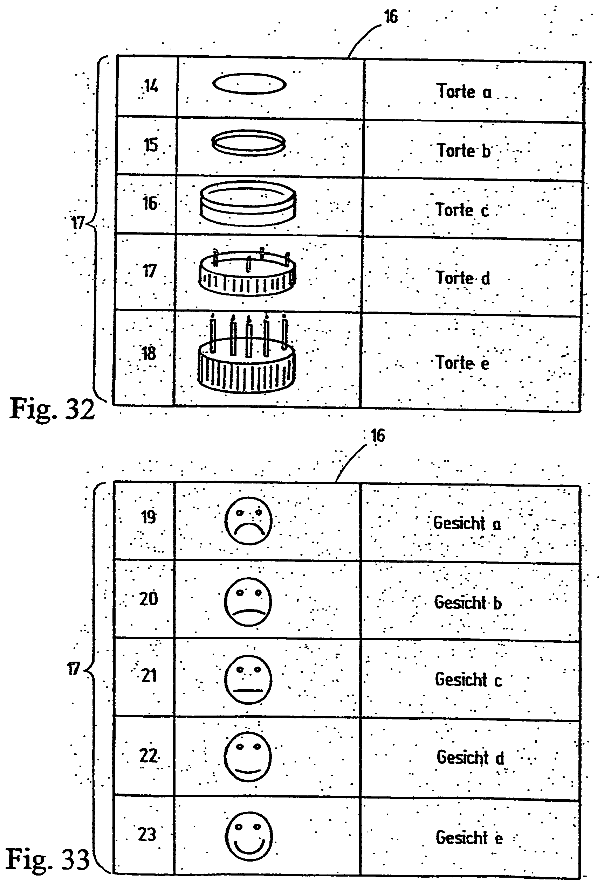

Figur 32 zeigt die Möglichkeit der Darstellung einer Geburtstagstorte mit insgesamt mit den Ordnungsnummern "14", "15", "16", "17", "18" bezeichneten Bildsequenzen. Hier kann eine quasi wachsende Torte, die schlussendlich mit brennenden Kerzen versehen ist, dargestellt werden.

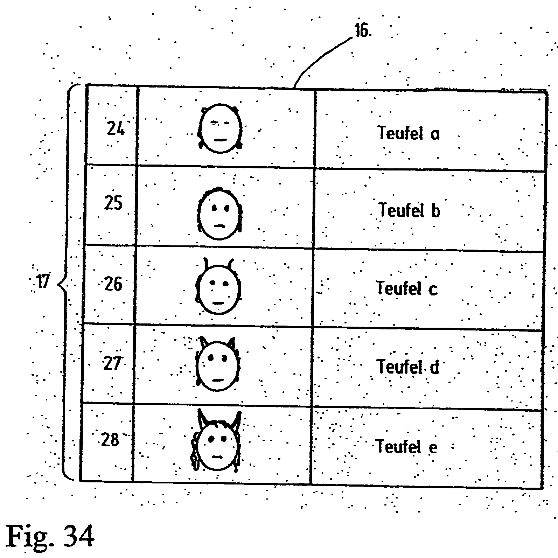

Figur 33 zeigt die Möglichkeit der Darstellung eines Gesichts, dessen Gesichtszüge sich vom Weinen zum Lachen oder umgekehrt verändern können. Die einzelnen Bildsequenzen tragen hier die Ordnungsnummern "19", "20", "21", "22", "23" Gemäss Figur 34 kann den Ordnungsnummern "24", "25", "26", "27" und "28" eine sich von einem Gesicht zu einem Teufel verändernde Bildsequenz zugeordnet sein.

Figur 35 zeigt schliesslich als Möglichkeit die Darstellung einer Blume, die in den einzelnen Bildsequenzen jeweils ein Blütenblatt verliert und gemäss der an sich bekannten "Flirtspiele" den Untertext" er/sie liebt mich", "er/sie liebt mich nicht" beziehungsweise "er/sie liebt mich doch" tragen kann.

Nach weiteren Ausführungsbeispielen können als bewegte Bilder beispielsweise eine lachende und/oder weinende Sonne, ein Haus mit qualmendem Schornstein in mehreren, jedenfalls wenigstens zwei Bildsequenzen umfassenden bewegten Darstellungen gesendet beziehungsweise empfangen werden. Diese Aufzählung ist selbstverständlich nicht komplett und abschliessend. Jede erdenkliche, insbesondere in schematisierter Darstellung mögliche Bilddarstellung kann nach dem erläuterten Verfahren als bewegtes Bild übertragen werden.

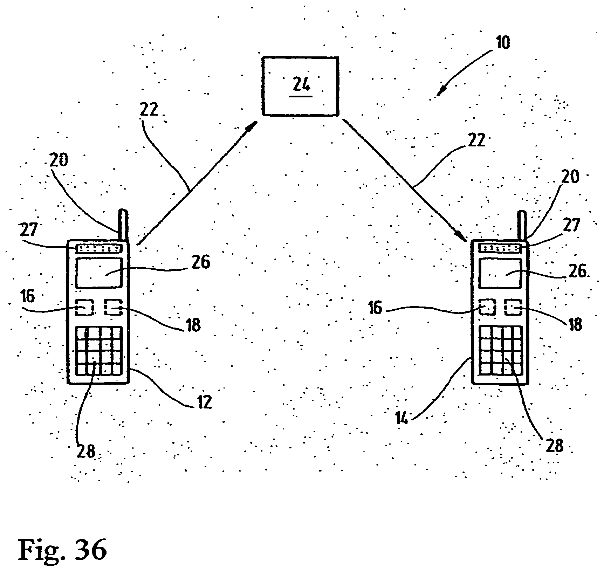

Figur 36 zeigt schematisch eine Anordnung 10 zum Übermitteln von bewegten Bildern mit musikalischer Untermalung von einem Sender 12 zu einem Empfänger 14. Sender 12 und/oder Empfänger 14 können beispielsweise Mobiltelefone, PCs, Telefaxgeräte, Communicator, Laptops, Notebooks oder dergleichen sein. Denkbar sind auch an Telekommunikationsanlagen angeschlossene Endgeräte (Telefone), die über eine entsprechende Ausstattung verfügen. Bei dem nachfolgenden Ausführungsbeispiel wird davon ausgegangen, dass es sich bei dem Sender 12 und dem Empfänger 14 jeweils um ein Mobiltelefon handelt, wobei jedoch die Funktionen auf die anderen genannten Geräte ohne Weiteres übertragbar sind und im Schutzumfange der Erfindung liegen.

Zunächst wird davon ausgegangen, dass eine Bedienperson des Senders 12 einer sich im Besitz des Empfängers 14 befindenden Person eine musikalisch untermalte bewegte Bildinformation senden möchte. Die Bedienperson des Senders 12 ruft hierzu - in später noch zu erläuternder Weise - aus einem Speichermittel 16 eine Abfolge von Bildsequenzen (später auch Symbole genannt), die in zeitlich versetzter Darstellung ein bewegtes Bild ergeben, auf. Zusätzlich kann, muss jedoch nicht, eine Information aufgerufen werden, die beim Empfänger neben der Darstellung der bewegten Bilder die Wiedergabe wenigstens einer Tonfolge auslöst.

Sendeseitig werden die Folge von wenigstens zwei zusammengehörigen, nicht identischen Symbolen und gegebenenfalls die Auslöseinformation der wiederzugebenden Tonfolge, mittels eines Mikroprozessors 18 aufbereitet und über eine Sende- und Empfangseinrichtung 20 als Kurzmitteilung 22 einem Diensteanbieter 24 übermittelt. Diensteanbieter 24 sind beispielsweise Betreiber von Mobilfunksystemen, wie beispielsweise C-Netze, D-Netze, E-Netze oder dergleichen. Das Senden einer Kurzmitteilung 22 über einen Diensteanbieter 24 zu einem ausgewählten Empfänger 14 ist allgemein bekannt, so dass im Rahmen der vorliegenden Beschreibung hierauf nicht näher eingegangen werden soll.

Über den Diensteanbieter 24 wird die die Folge der Bildsequenzen und gegebenenfalls die die Tonfolge wiedergebende Auslöseinformation repräsentierende Kurzmitteilung 22 dem Empfänger 14 übermittelt. Der Empfänger 14 erkennt - in ebenfalls noch zu erläuternder Weise - dass es sich bei der Kurzmitteilung 22 um die Darstellung bewegter Bilder mit musikalischer Untermalung handelt. Bei Aufruf der Kurzmitteilung 22 durch den Empfänger 14, was notwendigerweise nicht sofort, sondern auch zu einem späteren Zeitpunkt erfolgen kann, wird durch Erkennen der Bildfolge durch den Empfänger 14 durch einen ebenfalls vorgesehenen Mikroprozessor 18, der mit einem Speichermittel 16 zusammenwirkt, auf einer Anzeigeeinrichtung 26 die entsprechende Anzahl der Bildsequenzen zeitlich aufeinander folgend dargestellt, so dass für den Betrachter ein bewegtes Bild entsteht. Gleichzeitig wird über einen Lautsprecher 27 die den bewegten Bildern zugeordnete Tonfolge als Melodie, gegebenenfalls mit Gesang, wiedergegeben.

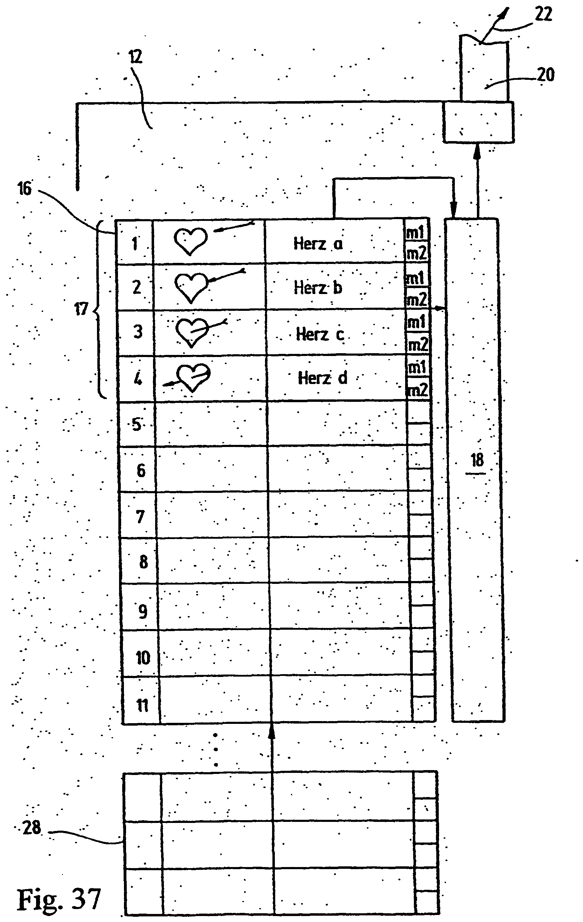

Figur 37 verdeutlicht in schematischer Blockschalbilddarstellung das Senden von bewegten Bildern mit musikalischer Untermalung. Gleiche Teile wie in Figur 36 sind mit gleichen Bezugszeichen versehen und nicht nochmals erläutert. Über eine Bedieneinrichtung 28, die beispielsweise von einer alphanumerischen Tastatur gebildet ist, können auf der Anzeigeeinrichtung 26 die bestehenden Möglichkeiten des Sendens von bewegten Bildern mit musikalischer Untermalung dargestellt werden. Diese Darstellung kann beispielsweise menügeführt erfolgen, indem durch Betätigen entsprechender Tasten der Bedieneinrichtung 28 die bestehenden Möglichkeiten einzeln, nacheinander oder zusammenhängend dargestellt werden. Bei dem erläuterten Ausführungsbeispiel wird davon ausgegangen, dass als bewegtes Bild ein sich einem Herz nähernder Pfeil übertragen werden soll. Dieses bewegte Bild ist beispielsweise in vier Bildsequenzen zerlegt, die im Speichermittel 16 unter Ordnungsnummern "1", "2", "3" und "4" abgelegt sind. Die einzelnen Bildsequenzen jeweils für sich betrachtet stellen eine Phase des Anfluges des Pfeiles auf das Herz dar. Jeder der Bildsequenzen, die quasi einem Bildsymbol entspricht, ist ein sprachlicher Ausdruck (Zeichenfolge) zugeordnet. Diese Zuordnung ist beispielsweise in der schematisch dargestellten tabellarischen Form im Speichermittel 16 abgelegt. Der Bildsequenz "1" ist beispielsweise der sprachliche Ausdruck "Herza" zugeordnet.

Der Bildsequenz "2" ist der sprachliche Ausdruck "Herzb", der Bildsequenz "3" der sprachliche Ausdruck "Herzc" und der Bildsequenz "4" der sprachliche Ausdruck "Herzd" zugeordnet.

Im Speichermittel 16 erfolgt ferner eine Zuordnung von die bildlichen Darstellungen untermalenden Tonfolgen (Musik). Hierbei ist beispielsweise jeder Bildsequenz eine Auswahl von zwei möglichen Tonfolgen "ml" beziehungsweise "m2" zugeordnet. Jedes dieser Kurzzeichen "ml" beziehungsweise "m2" löst die Wiedergabe einer bestimmten zugeordneten Tonfolge mit Übertragung der bewegten Bilder beim Empfänger - wie nachfolgend noch erläutert - aus. Gemäss dem dargestellten Beispiel ist die Tonfolge "m1" oder "m2" wählbar. Nach weiteren Ausführungsbeispielen kann auch lediglich eine Tonfolge "m" oder eine Vielzahl von Tonfolgen "ml" bis "mx" pro Bildsequenz oder pro Block 17 von zusammengehörenden Bildsequenzen zugeordnet sein.

Soll nunmehr vom Sender 12 dieser das Herz anfliegende Pfeil als bewegtes Bild mit musikalischer Untermalung einem Empfänger 14 übertragen werden, wird über den Mikroprozessor 18 die Sende- und Empfangseinheit 20 derart angesteuert, dass als Kurzmitteilung die Zeichenfolge "HerzaHerzbHerzcHerzdm1" gesendet wird.

Empfängerseitig wird diese Kurzmitteilung von der dort vorhandenen Sende- und Empfangseinrichtung 20 dem dortigen Mikroprozessor 18 übermittelt, der durch Einlesen in dem dort ebenfalls vorhandenen Speichermittel 16 einerseits die zugehörigen Bildsymbole (Bildsequenzen) und die zugehörige Tonfolge ermittelt. Durch Ansteuerung der Anzeigeeinrichtung 26 und des Lautsprechers 27 beim Empfänger 14 kann dann zeitlich aufeinander folgend die Darstellung der Bildsequenzen "1", "2", "3" und "4" erfolgen und gleichzeitig die der Zeichenfolge "m1" entsprechende Tonfolge (Musik) abgespielt werden. Für den Betrachter der empfängerseitigen Anzeigeeinrichtung 20 ergibt sich somit als bewegliches Bild der anfliegende Pfeil auf das Herz und gleichzeitig der Hörempfang der zugeordneten Melodie. Die Melodie als solche kann aus einer beliebigen Tonfolge, die zuvor festgelegt und in dem Speichermittel 16 des Empfängers abgespeichert ist, bestehen. Als Tonfolgen kommen hierbei einfache aufeinander folgende Töne, komplexe Melodien und/oder mit Gesang verbundene Melodien in Betracht. Als konkretes Beispiel könnte beispielsweise bei der Darstellung des auf das Herz anfliegenden Pfeils als Melodie der "Hochzeitsmarsch" intoniert werden.

Zur Vereinfachung der Übertragung kann vorgesehen sein, dass bei Auswahl der Ordnungsnummer "1" im Sender 12 automatisch alle zu einem Block 17 gehörenden Bildsequenzen, beispielsweise die Bildsequenzen mit den Ordnungsnummern "1", "2", "3" und "4", sowie eine zugehörige Tonfolge, beispielsweise die Tonfolge "m1", aufgerufen und zum Empfänger 14 gesendet werden.

Um eine zu übertragende Datenmenge weiter zu reduzieren, kann vorgesehen sein, dass bei Aufrufen der Ordnungsziffern "1", "2", "3" und "4" über den Mikroprozessor 18 automatisch erkannt wird, dass vier aufeinander folgende zusammengehörende (zu einem Block 17gehörende), an sich lediglich geringfügig unterschiedliche Bildsymbole (Bildsequenzen) mit einer zugehörigen Tonfolge übertragen werden sollen. Hieraus kann als Kurzmitteilung dann eine verkürzte Mitteilung derart erfolgen, dass lediglich die Kurzmitteilung beispielsweise lautet "Herzabcdm1". Die Kurzmitteilung besteht somit aus einem die gesamte Bildfolge kennzeichnenden Stamm "Herz" und den einzelnen Bildsequenzen entsprechenden Zuordnungen "abcd" und einer der Tonfolge entsprechenden Zuordnung "m1". Es wird deutlich, dass diese zu übertragende Kurzmitteilung 22 weniger Daten benötigt, als die oben erwähnte Aneinanderreihung der einzelnen Bildsequenzen mit der wenigstens einen Tonfolge. Empfängerseitig erfolgt dann über den dort vorgesehenen Mikroprozessor 18 eine entsprechende Rückwandlung und Darstellung auf der Anzeigeeinrichtung 26 und Wiedergabe über den Lautsprecher 27.

Um die Kurzmitteilung 22 für den Empfänger als Übermittlung zusammengehörender Bildsequenzen mit einer Tonfolge zu kennzeichnen, kann zusätzlich eine Kennzeichnung, beispielsweise mit der Taste "#" erfolgen, so dass die Kurzmitteilung dann aus der Zeichenfolge nach Variante 1 "HerzaHerzbHerzcHerzdm1#" oder nach der bevorzugten Kurzvariante 2 "Herzabcdm1#" besteht.

Selbstverständlich ist es für den Sender 12 auch möglich, aus einem zusammengehörenden Block 17 von Bildsequenzen auch nur einzelne, beispielsweise zwei Bildsequenzen auszuwählen, die dann als Kurzmitteilung übertragen werden. Beispielsweise können aus dem Block der Ordnungsnummern "1", "2", "3" und "4" die Ordnungsnummern "2" und "4"ausgewählt werden, so dass als Kurzmitteilung dann entweder "HerzbHerzdm1#" oder "Herzbdm1#" übermittelt wird. Entsprechend einer tatsächlich vorhandenen Anzahl von zusammengehörenden Bildsequenzen ergeben sich hierdurch unterschiedliche Möglichkeiten der Übertragung aus mehreren einzelnen Bildsequenzen bestehender bewegter Bilder mit der der Folge "m1" zugeordneten musikalischen Untermalung.

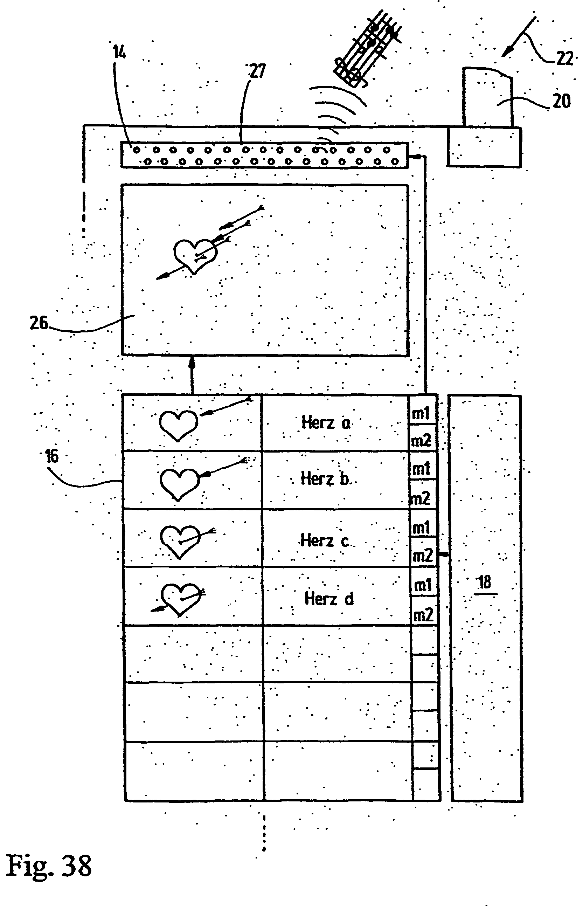

Figur 38 verdeutlicht nochmals schematisch den Empfang der Kurzmitteilung 22 beim Empfänger 14. Durch die Sende- und Empfangseinrichtung 20 erhält der Mikroprozessor 18 die Kurzmitteilung 22 und übermittelt diese der Speichereinheit 16. Durch die eindeutige Zuordnung der sprachlichen Ausdrücke zu den Bildsequenzen beziehungsweise der Zeichenfolge "m" zu den Tonfolgen lässt sich entsprechend der empfangenen Kurzmitteilung 22 auf der Anzeigeeinrichtung 26 die zeitliche Abfolge der einzelnen Bildsequenzen darstellen und gleichzeitig über den Lautsprecher 27 die zugeordnete Tonfolge wiedergeben.

Bei dem gewählten Beispiel ist das "Herz" als konstanter identischer Bildteil nur einmal darzustellen, während der anfliegende "Pfeil" in seinen vier Flugphasen entsprechend den Ordnungsnummern "1", "2" ,"3" und "4", die sendeseitig vergeben sind, alternierend dargestellt wird. In der Anzeigeeinrichtung 26 in Figur 3 sind schematisch die vier Flugphasen des Pfeiles angedeutet, die selbstverständlich nacheinander dargestellt werden. Für den Betrachter der Anzeigeeinrichtung 26 ergibt sich dadurch der dem Herz sich nähernde Pfeil, der gleichzeitig durch die über den Lautsprecher 27 intonierte Musik untermalt ist.

Die Mikroprozessorschaltung 18 kann eine Schleifenschaltung aufweisen, wonach die als Kurzmitteilung 22 übermittelten und über die Speichereinheit 16 in die Bildsequenzen beziehungsweise die Tonfolgen gewandelten Informationen fortlaufend wiederholend dargestellt beziehungsweise wiedergegeben werden. Dies kann erfolgen, bis von einer Bedienperson am Empfänger 14 die Darstellung beziehungsweise die Wiedergabe unterbrochen beziehungsweise abgebrochen wird.

Das empfängerseitige Aufrufen der Kurzmitteilung 22 und somit das Darstellen der bewegten Bilder und Wiedergeben der Tonfolgen kann entweder sofort nach Empfang der Kurzmitteilung 22 oder auch später erfolgen. Hierzu erfolgt eine entsprechende Zwischenspeicherung, bis von der Bedienperson des Empfängers 14 das Abrufen erfolgt. Bei dem erläuterten Ausführungsbeispiel ist davon ausgegangen worden, dass sendeseitig dem Block 17 bereits eine Tonfolge "m1" beziehungsweise "m2" zugeordnet ist. Es kann auch vorgesehen sein, dass empfangsseitig eine Tonfolge "m1", "m2" oder eine andere Tonfolge "mx" automatisch bei Empfang der Kurzmitteilung 22 aufgerufen und über den Lautsprecher 27 wiedergegeben wird. Hier durch erübrigt sich das sendeseitige Zuordnen einer bestimmten Tonfolge.

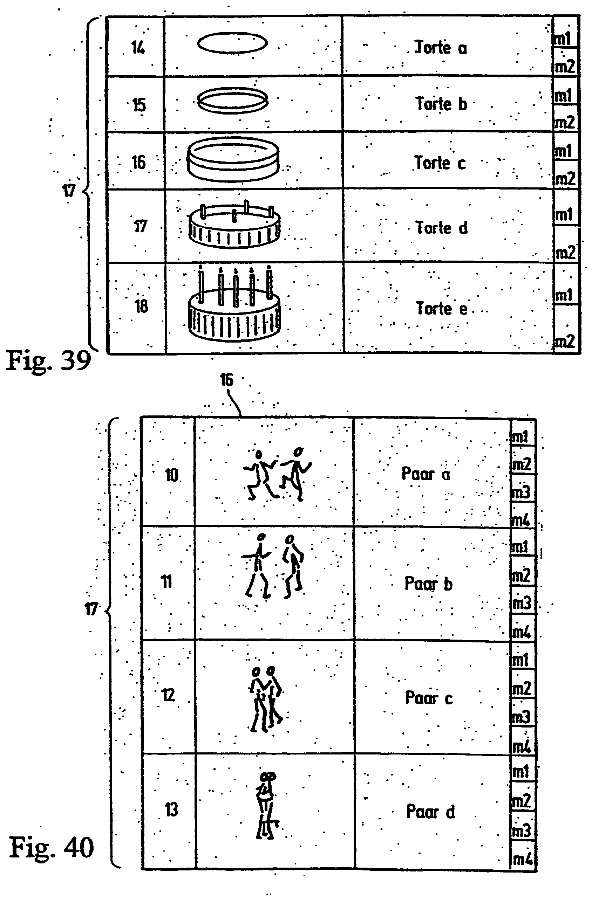

In den Figuren 39 und 40 sind weitere Ausführungsbeispiele dargestellt, die unterschiedliche Bildsequenzen für die Übertragung von bewegten Bildern mit gleichzeitigem Wiedergeben wenigstens einer Tonfolge betreffen. Dargestellt ist jeweils schematisch das Speichermittel 16, wobei zusammengehörende Bildsequenzen jeweils in einem Block 17 mit den zughörigen Ordnungsnummern gezeigt sind. Hinsichtlich des Aufrufes und Sendens der in den Figuren 39 und 40 beispielhaft dargestellten Bildsequenzen mit zugeordneten Tonfolgen wird auf die Beschreibung zu den Figuren 36 bis 38 verwiesen. Gemäss Figur 39 kann vorgesehen sein, dass ein bewegtes Bild in der Darstellung einer Geburtstagstorte aus beispielsweise insgesamt fünf Bildsequenzen besteht. Hierbei sind jeweils wieder die Folgen "m1" beziehungsweise "m2" für die Definition der zugehörigen Tonfolgen genannt. Eine vom Sender 12 zum Empfänger 14 übermittelte Kurzmitteilung 22 könnte demnach lauten "TorteaTortebTortecTortedTorteem2" beziehungsweise nach der Kurzvariante"Torteabcdem2".

Ein weiteres Beispiel zeigt Figur 40, wobei das bewegte Bild aus vier Bildsequenzen besteht, die ein sich annäherndes, beispielsweise tanzendes Paar darstellen. Anhand dieses Ausführungsbeispiels ist verdeutlicht, dass den bewegten Bildern auch mehr als zwei, nämlich hier vier verschiedene Tonfolgen "m1", "m2", "m3" beziehungsweise "m4" zugeordnet sein können. So kann beispielsweise durch Auswahl einer bestimmten dieser Tonfolgen eine unterschiedliche Melodie, beispielsweise ein unterschiedlicher Tanzrhythmus, wie beispielsweise Walzer, Tango, Foxtrott oder dergleichen, definiert sein.

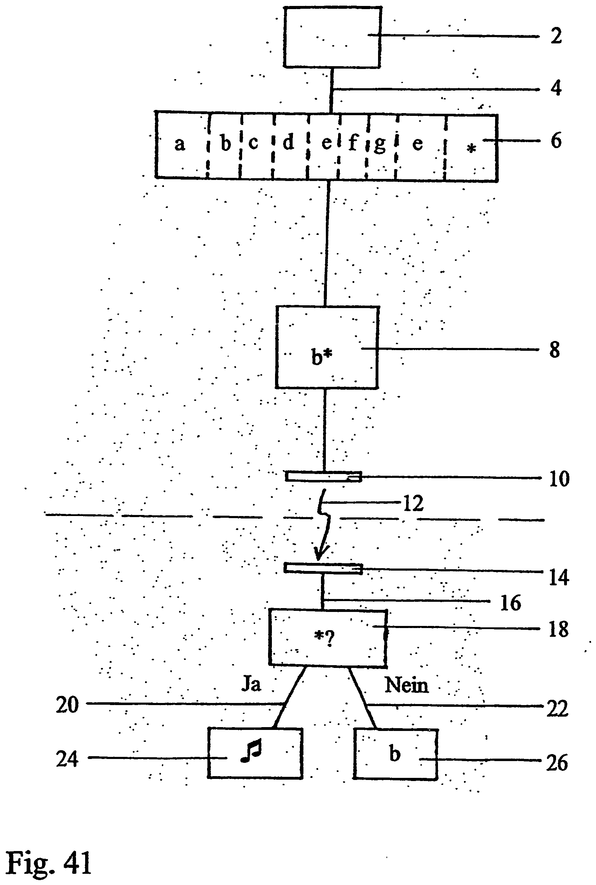

Die in Figur 41 dargestellte beispielhafte Vorrichtung weist einen Speicher 2 auf. Der Speicher 2 ist über eine elektrische Leitung 4 mit einem als erfindungsgemässes Auswahlmittel dienenden Touch Screen 6 verbunden. Weiterhin ist der Speicher 2 über eine nicht dargestellte elektrische Leitung mit einem Mikroprozessor 8 verbunden.

Auf dem Touch-Screen 6 sind in der Figur 41 die Buchstaben a-e dargestellt. Diese Buchstaben sind jeweils auf getrennten Feldern, die hier der Einfachheit halber ebenfalls mit a-e bezeichnet werden, auf dem Touch-Screen 6 angeordnet. Ein Benutzer der dargestellten Vorrichtung kann daher mit Hilfe des Touch-Screens 6 einen Buchstaben auf dem Touch-Screen 6 durch Antippen des entsprechenden Feldes auswählen.

Weiterhin ist auf dem Touch-Screen 6 ein "*" dargestellt. Dieses "*" ist ebenfalls auf einem gesonderten Segment des Touch-Screens 6 dargestellt. Dieses "*" stellt eine Wahlmöglichkeit zwischen zwei Modi der dargestellten Vorrichtung dar. Wählt der Benutzer der Vorrichtung auf dem Touch-Screen 6 das Feld "*" an, so werden alle folgenden Auswahlen des Benutzers von Buchstaben auf dem Touch-Screen 6 als Auswahl eines Tones von dem Mikroprozessor 8 aufgefasst. Der Mikroprozessor 8 fügt dann dem ausgewählten Buchstaben ein entsprechendes Kennzeichen, um es als ein Tonsignal verkörperndes Zeichen beziehungsweise als einen ein Tonsignal verkörpernden Buchstaben zu kennzeichnen. In der Figur ist daher der Mikroprozessor 8 schematisch mit der Zeichenkombination "b*" versehen. Dies soll symbolisieren, dass der Mikroprozessor 8 durch die Anwahl des Zeichens "*" auf dem Touch-Screen 6 durch den Benutzer in den Modus versetzt wurde, in welchem Modus er automatisch jedes auf dem Touch-Screen 6 angewählte Zeichen beziehungsweise jeden auf dem Touch-Screen 6 ausgewählten Buchstaben als ein Tonsignal verkörpernden Buchstaben auffasst, und somit automatisch jedem von dem Benutzer auf dem Touch Screen 6 ausgewählten Buchstaben eine entsprechende Kennung, in der dargestellten Ausführungsform ebenfalls ein "*", anhängt.

Weiterhin zeigt die Figur 41 einen Sender 10. Mit Hilfe des Senders 10, welcher eine nicht dargestellte Antenne zum Senden elektromagnetischer Wellen aufweist, lassen sich die von dem Mikroprozessor 8 digitalisierten Zeichenfolgen, in dem dargestellten Beispiel die Zeichenfolge "b*", als Modulation einer elektromagnetischen Welle versenden. Dieses Versenden ist durch den Pfeil 12 symbolisiert.

Soll mit Hilfe der dargestellten Vorrichtung ein Tonsignal verschickt werden, so wird zunächst die dargestellte Vorrichtung mit Hilfe eines nicht dargestellten Schalters mit einer nicht dargestellten Stromversorgung verbunden. Die nicht dargestellte Stromversorgung versorgt den Speicher 2, den Touch Screen 6, den Mikroprozessor 8 und den Sender 10. Nach dem Einschalten der Vorrichtung aktiviert der Mikroprozessor 8 automatisch einen Abrufvorgang, welcher Abrufvorgang aus dem Speicher 2 über die Leitung 4 Buchstaben a-e auf dem Touch-Screen 6 darstellt. Wählt nun der Benutzer auf dem Touch Screen 6 den Modus "*", so signalisiert der Benutzer somit dem Mikroprozessor 8, dass er (der Benutzer) im folgenden Tonsignale mit Hilfe der Vorrichtung verschicken will. Wählt nun wiederum anschliessend der Benutzer auf dem Touch-Screen 6 den entsprechenden Buchstaben, in der dargestellten Figur den Buchstaben b, so wird diese auf dem Touch-Screen 6 erfolgte Auswahl von dem Mikroprozessor 8 mit der Kennzeichnung "*" versehen und über den Sender 10 abgeschickt.

Empfangsseitig ist in der Figur 41 ein dem Sender 10 komplementärer Empfänger 14 dargestellt. Der Empfänger 14 ist über eine elektrische Leitung 16 mit einem zweiten Mikroprozessor 18 verbunden. Der Mikroprozessor 18 ist wiederum über Leitungen 20 und 22 mit einem Lautsprecher 24 und einer Flüssigkristallanzeige 26 verbunden.

Erkennt der Mikroprozessor 18, welcher ebenfalls durch einen nicht dargestellten Schalter mit einer nicht dargestellten Stromversorgung verbunden werden kann, dass der Empfänger 14 eine mit einem "*" versehene Information, in dem dargestellten Beispiel einen entsprechend gekennzeichneten Buchstaben "b", empfangen hat (dieses Erkennen ist in der Figur durch das in dem Mikroprozessorfeld 18 dargestellte Fragezeichen hinter dem Zeichen "*" schematisch symbolisiert), so aktiviert der Mikroprozessor 18 über die Leitung 20 den Lautsprecher 24 und gibt den dem Buchstaben b entsprechenden Ton über den Lautsprecher 24 wieder. Somit bedeutet das in der Figur 41 wiedergegebene "Ja" neben der elektrischen Leitung 20, dass der Mikroprozessor 18 die Frage, ob das empfangene Zeichen mit dem einen Ton kennzeichnenden Kennzeichen "*" versehen war, mit Ja, so dass anschliessend der Lautsprecher 24 aktiviert wird. Beantwortet im anderen Fall, das heisst in dem Fall, in dem das empfangene Zeichen kein Kennzeichen "*" trug, der Mikroprozessor 18 die entsprechende Frage mit Nein, so wird die Leitung 22 aktiviert und der Buchstabe selbst auf einer Flüssigkristallanzeige 26 wiedergegeben.

Bei der oberhalb der gestrichelten Linie in der Figur 41 dargestellten Vorrichtung kann es sich beispielsweise um ein sendendes Mobiltelefon handeln, während es sich bei der unterhalb der gestrichelten Linie in der Figur dargestellten Vorrichtung um ein empfangendes Mobiltelefon handeln kann. Auch kann es sich bei der oberhalb der gestrichelten Linie dargestellten Vorrichtung um einen Computer handeln, beispielsweise einen Personalcomputer, während es sich bei der unterhalb der gestrichelten Linie dargestellten Vorrichtung ebenfalls um einen Personalcomputer handeln kann, wobei beide Computer über eine Telefonleitung 12 miteinander verbunden sind.

Die dargestellten Ausführungsbeispiele sind selbstverständlich lediglich beispielhaft. So kann jede erdenkliche, insbesondere in schematisierter Darstellung mögliche Bilddarstellung nach dem erläuterten Verfahren als bewegtes Bild übertragen werden und eine beliebige Zuordnung einer Tonfolge erfolgen.

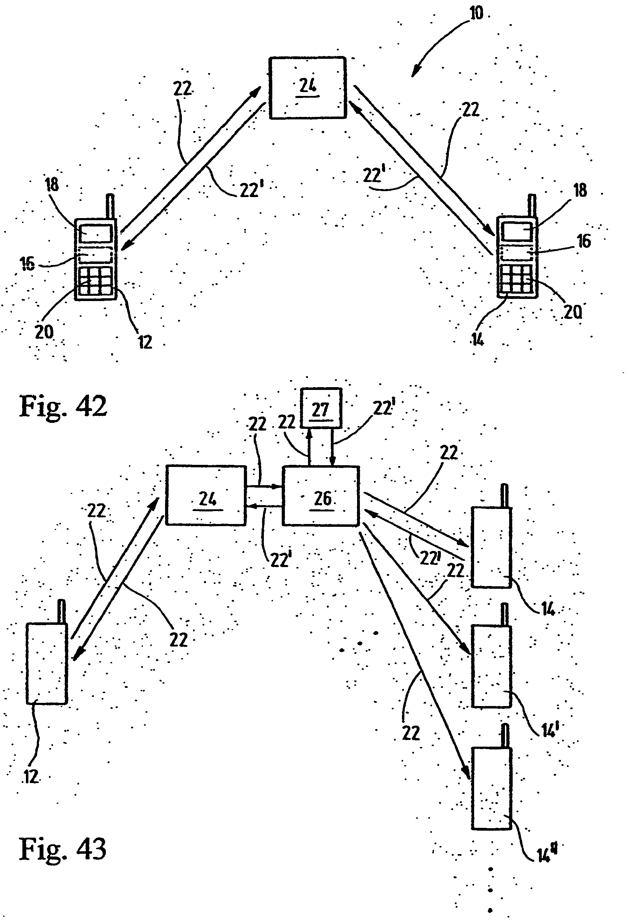

Figur 42 zeigt eine Anordnung 10 zum Übermitteln von Spielinformationen von einem Sender zu einem Empfänger 14. Sender 12 und/oder Empfänger 14 können beispielsweise Mobiltelefone, PCs, Telefaxgeräte, Communicator, Laptops, Notebooks oder dergleichen sein. Denkbar sind auch an Telekommunikationsanlagen angeschlossene Endgeräte (Telefone), die über ein entsprechendes Display verfügen. Bei den nachfolgenden Ausführungsbeispielen wird davon ausgegangen, dass es sich bei Sender 12 und Empfänger 14 jeweils um ein Mobiltelefon handelt, wobei jedoch die Funktionen auf die anderen genannten Geräte ohne Weiteres übertragbar sind und im Schutzumfange der Erfindung liegen.

Zunächst wird davon ausgegangen, dass eine Bedienperson des Senders 12 und eine Bedienperson des Empfängers 14 darüber einig sind, ein Spiel zu beginnen. Die Bedienperson des Senders 12 ruft hierzu - in später noch zu erläuternder Weise- aus einem Speichermittel 16 eine Spielmaske auf, die auf einer Anzeigeeinrichtung 18, die beispielsweise von einem Display gebildet ist, angezeigt wird. Über ein alphanumerisches Bedienfeld 20 wird dann von der Bedienperson des Senders 12 eine gewünschte Spielaktion, beispielsweise das Setzen einer Schachfigur, ausgewählt und als Kurzmitteilung 22 einem Diensteanbieter 24 übermittelt. Diensteanbieter 24 sind beispielsweise Betreiber von Mobilfunksystemen, wie beispielsweise C-Netze, D-Netze, E-Netze oder dergleichen. Das Senden einer Kurzmitteilung 22über einen Diensteanbieter 24 zu einem ausgewählten Empfänger 14 ist allgemein bekannt, so dass im Rahmen der vorliegenden Beschreibung hierauf nicht näher eingegangen werden soll.

Über den Diensteanbieter 24 wird diese Kurzmitteilung 22 dem Empfänger 14 übermittelt. Der Empfänger 14 erkennt - in ebenfalls noch zu erläuternder Weise - dass es sich bei der Kurzmitteilung 22 um eine Spielaktion des Senders 12 handelt. Bei Aufruf der Kurzmitteilung 22 durch den Empfänger 14, was notwendigerweise nicht sofort, sondern zu einem späteren Zeitpunkt erfolgen kann, wird durch Erkennen der Spielaktion durch den Empfänger 14 durch ein ebenfalls vorgesehenes Speichermittel 16 auf der Anzeigeeinrichtung 18 die entsprechende Spielmaske angezeigt und in der Spielmaske die gewünschte Spielaktion visualisiert. Die Bedienperson des Empfängers 14 kann nunmehr auf die Spielaktion des Senders 12 mit einer eigenen Spielaktion, beispielsweise das Setzen einer Schachfigur, reagieren. Hierzu wird die vom Empfänger gewünschte Spielaktion über die alphanumerische Tastatur 20 des Empfängers 14 eingegeben und als Kurzmitteilung 22 über den Diensteanbieter 24 dem Sender 12 übermittelt. Bei dieser Rückantwort sind Funktionen zwischen Sender und Empfänger quasi ausgetauscht. Durch das gegenseitige Senden der Kurzmitteilungen 22 beziehungsweise 22' kann somit zwischen dem Sender 12 und dem Empfänger 14 ein Spiel, beispielsweise ein Schachspiel, über einen längeren Zeitraumdurchgeführt werden. Der aktuelle Spielstand wird in den jeweiligen Speichermitteln 16 abgespeichert, so dass das Spiel auch unterbrochen werden kann. Eine Fortsetzung des Spiels ist jederzeit entweder durch den Sender 12 oder den Empfänger 14 durch Übermitteln der nächsten fälligen Spielaktion als Kurzmitteilung 22 beziehungsweise 22' möglich.

Anhand von Figur 43 soll ein weiterer Verfahrensablauf zum Übermitteln von Spielinformationen von einem Sender 12 zu wenigstens einem Empfänger 14, 14' und/oder 14" verdeutlicht werden. Bei dem in Figur 42 gezeigten Ausführungsbeispiel war davon ausgegangen worden, dass zwischen Sender 12 und Empfänger 14 Einigkeit darüber bestand, ein Spiel zu beginnen. Figur 43 verdeutlicht den Fall, dass ein Sender 12 ein Spiel aufnehmen will, jedoch momentan keinen Empfänger 14 als Spielpartner zur Verfügung hat. Die Spielaufnahme erfolgt, wie bereits zu Figur 42 erläutert, durch Senden einer Kurzmitteilung 22 an den Diensteanbieter 24. Dieser übermittelt diese Kurzmitteilung 22 an eine Agentur 26, der eine Vielzahl potentieller Empfänger 14, 14', 14" bekannt sind, die spielinteressiert sind. Die Kurzmitteilung 22 des Senders 12 kann nunmehr von der Agentur 26 an jeden der potentiellen Empfänger 14 gesendet werden. Hierbei kann vorgesehen sein, dass die Kurzmitteilung 22 an alle potentiellen Empfänger 14 gesendet wird oder die Empfänger 14 zuvor der Agentur 26 mitgeteilt haben, dass sie auf den Empfang einer eine Spielaktion beinhaltenden Kurzmitteilung 22 eines beliebigen Senders 12 warten.

Nachdem die Kurzmitteilung 22 an alle potentiellen Empfänger 14 gesandt wurde, wird von der Spielagentur 26 abgewartet, welcher der potentiellen Empfänger 14 als erstes eine Kurzmitteilung 22' sendet und somit die Bereitschaft zur Spielaufnahme signalisiert. Hierbei kann die Kurzmitteilung 22' sofort eine Spielaktion in Reaktion auf die Spielaktion des Senders 12 beinhalten. Alle weiteren potentiellen Empfänger 14 werden dann nicht mit in das Spiel aufgenommen. Im gezeigten Beispiel in Figur 43 wird davon ausgegangen, dass der Empfänger 14 als erster die Kurzmitteilung 22' zur Spielaufnahme sendet.

Denkbar sind auch Varianten, dass über die Agentur 26 mehrere Empfänger 14 als Spielpartner vermittelt werden. Hier können insbesondere Spiele realisiert werden, die mehr als zwei Mitspieler gestatten. Dies kann beispielsweise "Halma", "Mensch ärgere dich nicht" oder dergleichen sein. Über die Agentur 26 und den Dienstanbieter 24 werden dann die entsprechenden Kurzmitteilungen 22 beziehungsweise 22' allen zur Konferenzschaltung zusammengeschlossenen Sendern 12 beziehungsweise Empfängern 14 mitgeteilt. Über die Agentur 26 wird dann auch die Reihenfolge der Sendung von Kurzmitteilungen 22 beziehungsweise 22'der einzelnen am Spiel beteiligten Sender 12 beziehungsweise Empfänger 14 überwacht und gesteuert.

Es ist auch möglich, dass der Agentur 26 ein Spielcomputer 27 zugeordnet ist, der bei Bedarf das Spiel mit dem Sender 12 aufnimmt. Dies kann beispielsweise der Fall sein, wenn keiner der Empfänger 14, 14', 14" spielbereit, spielwillig oder dergleichen ist.

Nach einer weiteren Variante ist es möglich, dass bei Spielaufnahme durch den Sender 12 dieser mit mehreren Empfängern 14, 14', 14" verbunden wird, so dass der Sender 12 simultan mit mehreren Empfängern 14 Spielinformationen austauschen kann. Hier kann beispielsweise "Simultanschach" zwischen dem Sender 12 und den einzelnen Empfängern 14 gespielt werden. Der Sender 12 hat hierzu in seinem Speicherelement 16 die den einzelnen Empfängern 14, 14', 14" zugeordneten Spielmasken gespeichert und ruft nach Erhalt der jeweiligen Kurzmitteilung 22 von einem der Empfänger 14, 14' oder 14" diezugehörige Spielmaske in die Anzeigeeinrichtung 18 auf. Anhand der bei Kurzmitteilungen üblicherweise übersandten Sendeerkennung (vom Diensteanbieter zugeordnete Rufnummer) ist in einfacher Weise eine Zuordnung der einzelnen Empfänger 14, 14', 14" zu dem Sender 12 möglich, so dass Vermischungen der Spiele untereinander ausgeschlossen sind.

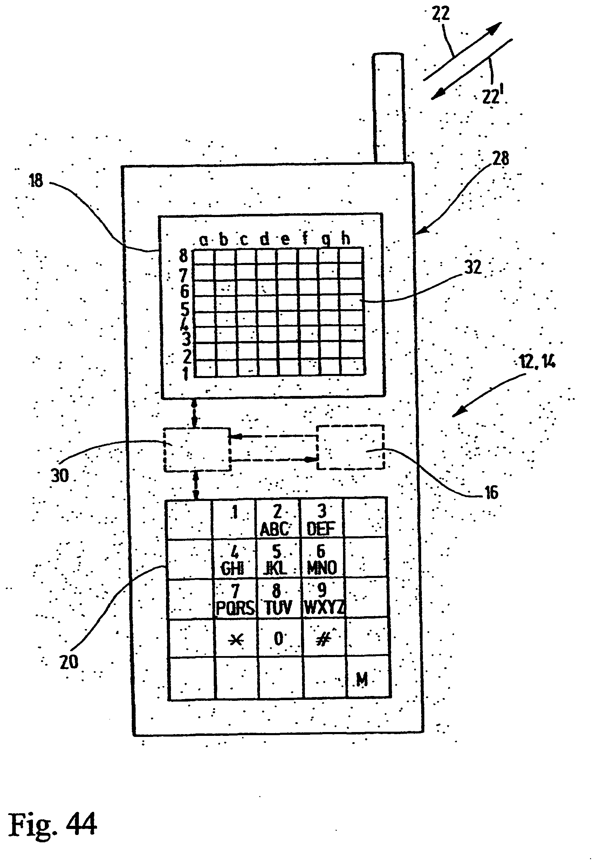

Figur 44 zeigt schematisch ein Mobiltelefon 28, das als Sender 12 und/oder Empfänger 14 mittels der anhand der Figuren 42 und 43 erläuterten Ausführungsbeispiele genutzt werden kann. Das Mobiltelefon 28 besitzt die Anzeigeeinrichtung 18, die alphanumerische Tastatur 20, einen integrierten Mikroprozessor 30 sowie die Speichermittel 16. Ferner ist eine nicht dargestellte Energieversorgung vorgesehen. Dies ist beispielsweise ein aufladbarer Akkumulator. Die Anordnung der einzelnen Elemente ist lediglich beispielhaft und kann selbstverständlich auch anders sein. Die Tastatur 20 besitzt beispielsweise eine Menütaste M, über die in dem Speicherelement 16 abgespeicherte Spiele menügeführt aufgerufen werden können. Hierbei können mehrere Spiele, beispielsweise "Schach", "Halma", "Dame", "Schiffe versenken", "Leiterspiel", "Glückspyramide", "Domino", "Pachisi®" ,"Menschärgere dich nicht" oder dergleichen abgespeichert sein. Entsprechend der Auswahl eines der Spiele durch eine Bedienperson wird auf der Anzeigeeinrichtung 18 eine entsprechende Spielmaske 32 dargestellt. Im vorliegenden Beispiel wird davon ausgegangen, dass mittels der Bedienperson Schach gespielt werden soll, so dass in der Anzeige 18 die Spielmaske "Schach" dargestellt ist. Zur Vereinfachung sind in Figur 44 nur die Umrisse mit den einzelnen Zuordnungen der Buchstaben a bis h beziehungsweise Ziffern 1 bis 8 dargestellt. Die Darstellung der Schachfiguren selber erfolgte aus Gründen der Übersichtlichkeit nicht. Die Darstellung auf der Anzeigeeinrichtung 18 kann beispielsweise figürlich erfolgen. Zur Vereinfachung kann jedoch auch vorgesehen sein, für die einzelnen Schachfiguren eine Buchstabenzuordnung zu treffen, beispielsweise "B" für Bauer, "T" für Turm, "S" für Springer, "L" für Läufer, "D" für Dame und "K" für König. Zur Unterscheidung zwischen schwarzen und weissen Spielsteinen kann einzusätzliches Merkmal, beispielsweise ein "*" oder dergleichen erfolgen. Auch kann vorgesehen sein, für die einzelnen Schachfiguren eine Farbzuordnung zu treffen. Insbesondere bei Farbdisplays an Mobiltelefonen kann so in vereinfachter Weise eine Spieldarstellung erfolgen. Zur Unterscheidung der schwarzen und weissen Spielsteine können unterschiedliche Farbintensitäten zur Verfügung stehen.

Entsprechend der Menüführung wird durch den Mikroprozessor 30 aus dem Speicherelement 16 die entsprechende Spielmaske 32 abgerufen und angezeigt. Der Mikroprozessor 30 ist hierzu, wie gestrichelt in Figur 44 angedeutet, mit dem Speicherelement 16 sowie der Anzeigeeinrichtung 18 und der alphanumerischen Bedientastatur 20 verbunden. Das Mobiltelefon 28 umfasst ferner hier nicht im Einzelnen dargestellte Sende- und Empfangseinrichtungen, mittels denen neben den üblichen Funktionen auch die Kurzmitteilungen 22 gesendet beziehungsweise Kurzmitteilungen 22' empfangen werden können.

Von einer Bedienperson des Senders 12 kann nunmehr über die alphanumerische Tastatur 20 ein Eröffnungszug des Schachspiels ausgewählt werden. Soll beispielsweise der Springer von B1 nach C3 gesetzt werden, wird dies über die alphanumerische Tastatur eingegeben. Bei Aktivierung einer Spielfunktion kann durch den Mikroprozessor 30 die alphanumerische Tastatur 20 auf Spielfunktionen umgeschaltet werden. Allerdings sind auch die einzelnen Züge ohne Umschaltung der Tastatur auf die Spielfunktion möglich. Eine Tastenbelegung der Tastatur 20 ist angedeutet, wie diese üblicherweise bei Mobiltelefonen gegeben ist. Mit den Ziffern 1 bis 0 sind Mehrfachbelegungen der einzelnen Tasten zum Eingeben der Buchstaben des Alphabets möglich. Entsprechend der gewünschten Spielaktion, beispielsweise Springer B1 nach C3, wird dieser Zug über die Tastatur 20 eingegeben und als Kurzmitteilung 22 gesendet. Um diese Kurzmitteilung 22 als Spielzug zu kennzeichnen, kann zusätzlich eine Kennzeichnung, beispielsweise mit der Taste "#", erfolgen, so dass die Kurzmitteilung aus der Zeichenfolge "SB1C3#" besteht. "S" steht hierbei für Springer, "B1"steht hierbei für die IstPosition und "C3" für die Soll-Position und "#" für die Kennzeichnung als Spielzug.

Diese Zeichenfolge wird über den Dienstanbieter 24 von dem Empfänger 14 oder den Empfängern 14, 14', 14" entsprechend der anhand von Figur 42 und Figur 43 erläuterten Möglichkeiten empfangen. Der Aufbau der Empfänger 14 ist prinzipiell gleich mit dem der Sender 12. Die Zeichenfolge wird also im Empfänger 14 vom Mikroprozessor 30 ausgewertet und infolge der Kennzeichnung mit dem Zeichen "#" als Spielzug erkannt. Ist dem Empfänger 14 zunächst unbekannt, um welches Spiel es sich handelt, kann eine weitere Zusatzkennzeichnung in Form einer Buchstabenkombination, einer Ziffernkombination oder dergleichen erfolgen, die eindeutig identifiziert, ob es sich beispielsweise um einen Spielzug für das Spiel "Schach" handelt. Hieraufhin wird über den Mikroprozessor 30 aus dem Speicherelement 16 die entsprechende Spielmaske aufgerufen und auf der Anzeigeeinrichtung 18 zur Anzeige gebracht. Dieses Aufrufen kann entweder sofort oder nach Lesen der Kurzmitteilung durch die Bedienperson des Empfängers 14 erfolgen. Die Kurzmitteilung 22 wird bis zum Aufruf zwischengespeichert. Mit dem empfängerseitigen Aufruf der Spielmaske wird gleichzeitig die gesendete Spielaktion des Senders 12 auf der Anzeigeeinrichtung 18 visualisiert, indem beispielsweise der Zug "Springer B1 nach C3" angezeigt wird. Die Bedienperson des Empfängers 14 kann nunmehr entweder gleich oder später einen Folgezug, beispielsweise Bauer D7 nach D6, als ihre Spielaktion übermitteln. Der Empfänger 14 übernimmt hiermit die Sendefunktion, während der ursprüngliche Sender die Empfangsfunktion übernimmt. Als Zeichenfolgewürde dann "BD7D6#" eingegeben werden.

Entsprechend dem Austausch der Kurzmitteilungen 22 beziehungsweise 22 kann damit von dem Sender 12 und dem Empfänger 14 über einen beliebigen Zeitraum das Schachspielgeführt werden. Die jeweilige Spielmaske 32 mit dem aktuellen Spielstand ist im Speicherelement 16 abgespeichert und kann bei Bedarf über die Menüführung M aufgerufen werden. Somit lässt sich das Spiel auch mit grösseren Unterbrechungen führen.

## Patentansprüche

1. Verfahren zum Übermitteln von Informationen von einem kurzmitteilungstauglichen Mobiltelefon auf mindestens ein anderes Mobiltelefon, wobei diese Mobiltelefone auf einem öffentlich zugänglichen Mobiltelefonnetz betrieben werden, **dadurch gekennzeichnet, dass** ein Bild, eine Bildfolge, ein Ton oder eine Tonfolge oder irgendeine Kombination solcher Daten, die auf dem Sender-Mobiltelefon abgespeichert sind, je einer eindeutigen alphanumerischen Zeichenfolge zugeordnet werden und diese Zuordnung im Sender-Mobiltelefon abgespeichert ist, diese alphanumerische Zeichenfolge mittels der Tastatur anwählbar ist und via Kurzmitteilung auf ein Empfänger-Mobiltelefon übermittelt wird und dort aufgrund einer ebensolchen eindeutigen, im Empfänger-Mobiltelefon abgespeicherten Zuordnung der Zeichenfolge zu einem im Empfänger-Mobiltelefon ebenfalls abgespeicherten Bild, einer Bildfolge, eines Tons oder einer Tonfolge oder irgendeiner Kombination solcher Daten dieselben auf dem Display des Empfänger-Mobiltelefones zur Anzeige und/oder auf dessen Lautsprecher zum Abspielen gebracht wird, sodass anstelle der eigentlichen umfangreichen Bild- und/oder Tondaten einzig eine kurze alphanumerischer Zeichenfolge effektiv über das Mobilfunknetz übermittelt wird.

2. Verfahren nach Anspruch 1, **dadurch gekennzeichnet, dass** senderseitig das bestimmte Symbol und die dem bestimmten Symbol zugeordnete Zeichenfolge mittels einer Eingabeeinheit gesteuerten Mikroprozessor unter Zuhilfenahme eines in einem Speicher zuvor abgespeicherten Algorithmus ausgewählt wird, und dass empfangsseitig das der empfangenen Zeichenfolge zugeordnete Symbol anhand einer Tabelle von Zeichenfolgen und zugeordneten Symbolen von einem Mikroprozessor unter Zuhilfenahme eines in einem Speicher zuvor abgespeicherten Algorithmus ermittelt wird und aus einem Speicher abgerufen wird, in welchem Speicher es vor dem Abrufen zusammen mit der Zeichenfolge abgespeichert wurde.

3. Verfahren nach einem der vorhergehenden Ansprüche, **dadurch gekennzeichnet, dass** sendeseitig vor dem Absenden der Zeichenfolge der Zeichenfolge eine Kennung hinzugefügt wird, welche Kennung die Zeichenfolge als verschlüsseltes Symbol kennzeichnet, wobei die Kennung zusammen mit der Zeichenfolge versandt wird, und dass empfangsseitig nur bei denjenigen empfangenen Zeichenfolgen ein zugeordnetes Symbol ermittelt wird, die eine Kennung tragen, welche Kennung die Zeichenfolge als verschlüsseltes Symbol kennzeichnet.

4. Verfahren nach einem der vorhergehenden Ansprüche, **dadurch gekennzeichnet, dass** sendeseitig wenigstens zwei zusammengehörige, nicht identische Symbole ausgewählt werden, zu jedem der wenigstens zwei Symbole sendeseitig eine Zeichenfolge ermittelt wird, die den Symbolen zugeordneten Zeichenfolgen dem Empfänger gesendet werden und empfangsseitig die Folge der Zeichenfolgen in die zugehörenden Symbole gewandelt werden und die zugeordneten Symbole nacheinander auf einer Anzeigeeinrichtung angezeigt werden.

5. Verfahren nach einem der Ansprüche 1 bis 4, **dadurch gekennzeichnet, dass** die Folge der zueinander gehörenden, nicht identischen Symbole den Bildsequenzen eines sich bewegenden Bildes entspricht, wobei die Symbole sendeseitig in einer abgespeicherten Tabelle abrufbar sind und die den einzelnen Symbolen zugeordneten Zeichenfolgen aneinander gereiht dem Empfänger übermittelt werden.

6. Verfahren nach Anspruch 5, **dadurch gekennzeichnet, dass** zueinander gehörende, nicht identische Symbole in einem Block zusammengefasst sind.

7. Verfahren nach Anspruch 6, **dadurch gekennzeichnet, dass** den in einem Block zusammengefassten Symbolen eine gleiche Zeichenfolge, Stamm, zugeordnet ist, die sich lediglich in einer die jeweilige Abweichung der folgenden Bildsequenz charakterisierenden Änderung, Zusatz oder dergleichen unterscheidet.

8. Verfahren nach einem der vorhergehenden Ansprüche, **dadurch gekennzeichnet, dass** bei einer übertragenen Folge von Symbolen, Bildsequenzen, repräsentierenden Zeichenfolgen ein allgemeines Kennzeichen hinzugefügt wird.

9. Verfahren nach einem der Ansprüche 5 bis 7, **dadurch gekennzeichnet, dass** jedem der Symbole, Bildsequenzen, eine diese kennzeichnende Ordnungsnummer zumindest sendeseitig zugeordnet ist.

10. Verfahren nach Anspruch 9, **dadurch gekennzeichnet, dass** bei Auswahl einer ersten Ordnungsnummer innerhalb eines Blocks alle zu diesem Block gehörenden Symbole, Bildsequenz, aufgerufen und gesendet werden.

11. Verfahren nach Anspruch 10, **dadurch gekennzeichnet, dass** aus allen Ordnungsnummern eines Blocks eine Teilauswahl von wenigstens zwei Ordnungsnummern erfolgt und nur diesen ausgewählten Ordnungsnummern entsprechende Symbole (Bildsequenz) gesendet werden.

12. Verfahren nach einem der vorangehenden Ansprüche, **dadurch gekennzeichnet, dass** sendeseitig wenigstens zwei zusammengehörige, nicht identische Symbole ausgewählt werden, zu jedem der zwei Symbole sendeseitig eine Zeichenfolge ermittelt wird, die den Symbolen zugeordneten Zeichenfolgen dem Empfänger gesendet werden und empfangsseitig die Zeichenfolgen in die zugehörigen Symbole gewandelt werden und die Symbole nacheinander auf einer Anzeigeeinrichtung angezeigt werden und gleichzeitig wenigstens eine den Symbolen zugeordnete Tonfolge akustisch wiedergegeben wird.

13. Verfahren nach Anspruch 12, **dadurch gekennzeichnet, dass** empfangsseitig die wenigstens eine den Symbolen zugeordnete Tonfolge fest zugeordnet ist.

14. Verfahren nach Anspruch 12, **dadurch gekennzeichnet, dass** sendeseitig die empfangsseitig wiedergegebene Tonfolge beeinflussbar ist.

15. Verfahren nach einem der vorhergehenden Ansprüche, **dadurch gekennzeichnet, dass** empfangsseitig mehrere Tonfolgen abgespeichert sind, von denen sendeseitig wenigsten eine der Tonfolgen abrufbar ist.

16. Verfahren nach einem der vorhergehenden Ansprüche, **dadurch gekennzeichnet, dass** die den Symbolen und der wenigstens einen Tonfolge entsprechenden Zeichen sendeseitig in einer abgespeicherten Tabelle abrufbar sind und die Zeichen aneinander gereiht dem wenigstens einen Empfänger übermittelt werden.

17. Verfahren nach einem der vorhergehenden Ansprüche, **dadurch gekennzeichnet, dass** zusammengehörende Bilder und Töne in einem Block zusammengefasst sind.

18. Verfahren nach einem der vorhergehenden Ansprüche, **dadurch gekennzeichnet, dass** bei Auswahl einer zu einem Block gehörenden Bilder automatisch alle zu diesem Block gehörenden Bilder und Töne übertragen werden.

19. Verfahren nach einem der vorhergehenden Ansprüche, **dadurch gekennzeichnet, dass** das Bild, die Bildfolge, der Ton oder die Tonfolge oder irgendeine Kombination solcher Daten aus einer Tabelle von Symbolen ausgewählt werden kann.

20. Mobiltelefon mit Kurzmitteilungsfunktion zum Betreiben auf einem Mobiltelefonnetz zum Senden und/oder Empfangen von Informationen, **gekennzeichnet durch** einen Speicher (4) zum Speichern von wenigstens einem Symbol in Form eines Bildes, einer Bildfolge, eines Tones oder einer Tonfolge und einen mit diesen Symbolen zusammenwirkenden Mikroprozessor, einem Auswahlmittel zum Auswählen wenigstens eines der Symbole, einem Zuordnungsmittel zum Zuordnen einer das Symbol nicht vollständig repräsentierenden, wenigstens ein Zeichen umfassenden Zeichenfolge zu dem wenigstens einen Symbol in Form eines Bildes, einer Bildfolge, eines Tones oder einer Tonfolge oder irgendeiner Kombination derselben, einem Sendemittel und/oder Empfangsmittel zum Senden und/oder Empfangen via Kurzmitteilung der Zeichenfolge und einem Anzeigemittel zum Anzeigen und/oder Abspielen des wenigstens einen Symbols in Form eines Bildes, einer Bildfolge, eines Tones oder einer Tonfolge oder einer Kombination derselben.

21. Mobiltelefon mit Kurzmitteilungsfunktion zum Betreiben auf einem Mobiltelefonnetz zum Senden und/oder Empfangen von Informationen nach Anspruch 20, **gekennzeichnet durch** zusätzliche Zuordnungsmittel zum Zuordnen einer Zeichenfolge zu dem Symbol sowie Kennzeichnungsmittel zum Kennzeichnen Zeichenfolge als verschlüsseltes Symbol und Sendemittel zum Senden der Zeichenfolge;
Unterscheidungsmittel zum Unterscheiden einer verschlüsselten Zeichenfolge von einer nicht verschlüsselten Zeichenfolge, wobei die Unterscheidungsmittel ein Erkennungsmittel enthalten, welches eine einer Zeichenfolge hinzugefügte Kennung erkennt, welche Kennung dem Unterscheidungsmittel anzeigt, dass es sich bei der Zeichenfolge um ein verschlüsseltes Symbol handelt; Unterscheidungsmittel zum Unterscheiden verschlüsselten Zeichenfolge von einer nicht verschlüsselten Zeichenfolge
Zuordnungsmittel zum Zuordnen eines Symbols zu der empfangenden verschlüsselten Zeichenfolge;
Empfangsmittel zum Empfangen der Zeichenfolge;
optische Anzeige- und akustische Abspielmittel zum Anzeigen und/oder Abspielen der empfangenen Zeichenfolge.

22. Mobiltelefon mit Kurzmitteilungsfunktion zum Betreiben auf einem Mobiltelefonnetz zum Senden und/oder Empfangen von Informationen nach einem der Ansprühe 20 bis 21, **gekennzeichnet durch**:
einen Speicher (4) zum Speichern von Audio-Information darstellenden Zeichen (a, b, c, d, e, f, g, e);
ein Auswahlmittel (6) zum Auswahlen einer Audio-Information in der Form mindestens eines diese Audio-Information darstellenden Zeichens (a, b, c, d, e, f, g, e) aus dem Speicher (4);
einen Sender zum Senden des die Audio-Information darstellenden mindestens einen Zeichens (b), wobei die Zeichen (a, b, c, d, e, f, g, e) Töne (a, b, c, d, e, f,'g, e) oder Töne darstellende Buchstaben (a, b, c, d, e, f, g, e) sind;
einen Empfänger zum Empfangen von Audio-Information darstellenden Zeichen (a, b, c, d, e, f, g, e); einen Wandler (18) zum Umwandeln der die Audio-Information darstellenden Zeichen (a,b,c, d, e, f, g, e) in Tonsignale (a, b, c, d, e, f, g, e); ein Lautsprechermittel (24) zum Wiedergeben der Tonsignale (a, b, c, d, e, f, g, e).

23. Mobiltelefon mit Kurzmitteilungsfunktion zum Betreiben auf einem Mobiltelefonnetz zum Senden und/oder Empfangen von Informationen einem der Ansprüche 20 bis 22, **dadurch gekennzeichnet, dass** dem Sender (12) und dem wenigstens einen Empfänger (14) ein Mikroprozessor, der mit wenigstens einem Speichermittel (16) zusammenwirkt, zugeordnet ist und in dem wenigstens einen Speichermittel (16) eine vorgebbare Anzahl von zusammengehörigen, nicht identischen Symbolen, Bildsequenzen, mit ihren zugehörigen Zeichenfolgen sowie wenigstens eine den Symbolen zugeordnete Tonfolge abgelegt sind, und mit einer Anzeigeeinrichtung zum Anzeigen der Symbole sowie mit einer akustischen Wiedergabeeinrichtung zum Wiedergeben der wenigstens einen Tonfolge und mit einer Sende- und Empfangseinrichtung zum Übermitteln der Zeichenfolgen.

24. Mobiltelefon mit Kurzmitteilungsfunktion zum Betreiben auf einem Mobiltelefonnetz zum Senden und/oder Empfangen von Informationen nach einem der Ansprüche 20 bis 23, **gekennzeichnet durch** einen Speicher (4) zum Speichern von Audio-Information darstellenden Zeichen (a, b, c, d, e, f, g, e); ein Auswahlmittel (6) zum Auswählen einer Audio-Information in der Form mindestens eines diese Audio-Information darstellenden Zeichens (a, b, c, d, e, f, g, e) aus dem Speicher (4); einen Sender zum Senden des die AudioInformation darstellenden mindestens einen Zeichens (b).

25. Verwendung eines Mobiltelefones mit Kurzmitteilungsfunktion, betrieben auf einem öffentlich zugänglichen Mobiltelefonnetz, mit dem ein Bild, eine Bildfolge, ein Ton oder eine Tonfolge oder irgendeine Kombination solcher Daten, die auf dem Sender-Mobiltelefon abgespeichert sind, je einer eindeutigen alphanumerischen Zeichenfolge zugeordnet werden und diese Zuordnung im Sender-Mobiltelefon abgespeichert ist, diese alphanumerische Zeichenfolge mittels der Tastatur anwählbar sind und via Kurzmitteilung auf ein Empfänger-Mobiltelefon übermittelt wird und dort aufgrund einer ebensolchen eindeutigen, im Empfänger-Mobiltelefon abgespeicherten Zuordnung der Zeichenfolge zu einem im Empfänger-Mobiltelefon ebenfalls abgespeicherten Bild, einer Bildfolge, eines Tons oder einer Tonfolge oder irgendeiner Kombination solcher Daten dieselben auf dem Display des Empfänger-Mobiltelefones zur Anzeige und/oder auf dessen Lautsprecher zum Abspielen gebracht wird, sodass anstelle der eigentlichen umfangreichen Bild- und/oder Tondaten einzig eine kurze alphanumerischer Zeichenfolge effektiv über das Mobilfunknetz übermittelt wird.

## Claims

1. Method for transmitting information from a mobile telephone suitable for short messaging to at least one other mobile telephone, this mobile telephone being operated on a publicly accessible mobile telephone network, **characterized in that** an image, an image sequence, a sound or a sound sequence or any combination of such data, stored on the transmitter mobile telephone, are each assigned a unique alphanumeric character string and this assignment is stored in the transmitter mobile telephone, this alphanumeric character string being selectable by means of a keyboard and being transmitted via a short message to a receiver mobile telephone and, based on the same unique assignment, stored in the receiver mobile telephone, of the character string to an image, an image sequence, a sound or a sound sequence or any combination of such data, also stored in the receiver mobile telephone, the same is displayed on the display of the receiver mobile telephone and/or played back by its loudspeaker, so that only a short alphanumeric character string is effectively transmitted via the mobile radio network instead of the actual extensive image and/or sound data.

2. Method according to claim 1, **characterized in that** the specific symbol and the character string assigned to the specific symbol are selected on the transmission side by means of a microprocessor controlled by an input unit using an algorithm previously stored in a memory, and **in that** on the reception side the symbol assigned to the received character string is determined by a microprocessor with the aid of a table of character strings and assigned symbols using an algorithm previously stored in a memory and is retrieved from a memory, in which memory it was stored together with the character string before retrieval.

3. Method according to either of the preceding claims, **characterized in that** an identifier is added on the transmission side before the character string is sent, which identifier identifies the character string as an encrypted symbol, the identifier being sent together with the character string, and **in that** an assigned symbol is determined on the reception side only for those character strings received which bear an identifier which identifies the character string as an encrypted symbol.

4. Method according to one of the preceding claims, **characterized in that** at least two related, non-identical symbols are selected on the transmission side, a character string is determined on the transmission side for each of the at least two symbols, the character strings assigned to the symbols are sent to the receiver and on the reception side the sequence of the character strings is converted into the assigned symbols and the assigned symbols are displayed successively on a display device.

5. Method according to one of claims 1 to 4, **characterized in that** the sequence of the related, non-identical symbols corresponds to the image sequences of a moving image, the symbols being retrievable on the transmission side in a stored table and the character strings assigned to the individual symbols being transmitted to the receiver in sequence.

6. Method according to claim 5, **characterized in that** related, non-identical symbols are combined in a block.

7. Method according to claim 6, **characterized in that** the symbols combined in a block are assigned an identical character string, root, which only differs on account of a change, addition or similar which characterizes the particular deviation from the subsequent image sequence.

8. Method according to one of the preceding claims, **characterized in that** a general identifier is added to character strings representing a transmitted sequence of symbols, image sequences.

9. Method according to one of claims 5 to 7, **characterized in that** each of the symbols, image sequences, is assigned an order number identifying said symbol at least on the transmission side.

10. Method according to claim 10, **characterized in that** when a first order number is selected within a block, all symbols, image sequences, belonging to this block are retrieved and sent.

11. Method according to one claim 10, **characterized in that** a partial selection of at least two order numbers is made from all order numbers of a block and symbols, image sequence, corresponding only to these selected order numbers are sent.

12. Method according to one of the preceding claims, **characterized in that** at least two related, non-identical symbols are selected on the transmission side, a character string is determined on the transmission side for each of the two symbols, the character strings assigned to the symbols are sent to the receiver and on the reception side the character strings are converted into the assigned symbols and the symbols are displayed successively on a display device and at the same time at least one sound sequence assigned to the symbols is reproduced acoustically.

13. Method according to claim 12, **characterized in that** the at least one sound sequence assigned to the symbols is permanently assigned on the reception side.

14. Method according to claim 12, **characterized in that** the sound sequence reproduced on the reception side may be influenced on the transmission side.

15. Method according to one of the preceding claims, **characterized in that** a plurality of sound sequences are stored on the reception side, at least one of which sound sequences may be retrieved on the transmission side.

16. Method according to one of the preceding claims, **characterized in that** the characters corresponding to the symbols and the at least one sound sequence may be retrieved on the transmission side in a stored table and the characters are transmitted to the at least one receiver in sequence.

17. Method according to one of the preceding claims, **characterized in that** related images and sounds are combined in a block.

18. Method according to one of the preceding claims, **characterized in that** when an image belonging to a block is selected, all images and sounds belonging to this block are automatically transmitted.

19. Method according to one of the preceding claims, **characterized in that** the image, image sequence, sound or sound sequence or any combination of such data may be selected from a table of symbols.

20. Mobile telephone having a short-messaging function for operation on a mobile telephone network for transmitting and/or receiving information, **characterized by** a memory (4) for storing at least one symbol in the form of an image, an image sequence, a sound or a sound sequence and a microprocessor interacting with these symbols, a selection means for selecting at least one of the symbols, an assignment means for assigning a character string which does not completely represent the symbol and comprises at least one character to the at least one symbol in the form of an image, an image sequence, a sound or a sound sequence or any combination thereof, a transmission means and/or reception means for transmitting and/or receiving the character string via a short message, and a display means and/or playback means for displaying and/or playing back the at least one symbol in the form of an image, an image sequence, a sound or a sound sequence or a combination thereof.

21. Mobile telephone having a short-messaging function for operation on a mobile telephone network for transmitting and/or receiving information according to claim 20, **characterized by** additional assignment means for assigning a character string to the symbol and identification means for identifying the character string as an encrypted symbol and transmission means for transmitting the character string;
distinguishing means for distinguishing an encrypted character string from an unencrypted character string, the distinguishing means including a recognizing means that recognizes an identifier added to a character string, which identifier indicates to the distinguishing means that the character string is an encrypted symbol;
distinguishing means for distinguishing an encrypted character string from an unencrypted character string;
assignment means for assigning a symbol to the receiving encrypted character string;
receiving means for receiving the character string;
optical display and acoustic playback means for displaying and/or playing back the received character string.

22. Mobile telephone having a short-messaging function for operation on a mobile telephone network for transmitting and/or receiving information according to one of claims 20 to 21, **characterized by**:
a memory (4) for storing characters (a, b, c, d, e, f, g, e) representing sound information;
a selection means (6) for selecting sound information in the form of at least one character (a, b, c, d, e, f, g, e) representing said sound information from the memory (4);
a transmitter for transmitting the at least one character (b) representing the sound information, the characters (a, b, c, d, e, f, g, e) being sounds (a, b, c, d, e, f, g, e) or letters (a, b, c, d, e, f, g, e) representing sounds;
a receiver for receiving characters (a, b, c, d, e, f, g, e) representing sound information; a converter (18) for converting the characters (a, b, c, d, e, f, g, e) representing the sound information into sound signals (a, b, c, d, e, f, g, e); a loudspeaker means (24) for reproducing the sound signals (a, b, c, d, e, f, g, e).

23. Mobile telephone having a short-messaging function for operation on a mobile telephone network for transmitting and/or receiving information according to one of claims 20 to 22, **characterized in that** a microprocessor which interacts with at least one storage means (16) is associated with the transmitter (12) and the at least one receiver (14) and in which at least one storage means (16) a predeterminable number of related, non-identical symbols, image sequences, together with their assigned character strings and at least one sound sequence assigned to the symbols, which mobile telephone also having a display means for displaying the symbols, an acoustic reproduction means for reproducing the at least one sound sequence and a transmission and reception means for transmitting the character strings.

24. Mobile telephone having a short-messaging function for operation on a mobile telephone network for transmitting and/or receiving information according to one of the claims 20 to 23, **characterized by** a memory (4) for storing characters (a, b, c, d, e, f, g, e) representing sound information; a selection means (6) for selecting sound information in the form of at least one character (a, b, c, d, e, f, g, e) representing said sound information from the memory (4); a transmitter for transmitting the at least one character (b) representing the sound information.

25. Use of a mobile telephone having a short-messaging function, operated on a publicly accessible mobile telephone network, by means of which an image, an image sequence, a sound or a sound sequence or any combination of such data, stored on the transmitter mobile telephone, are each assigned a unique alphanumeric character string and this assignment is stored in the transmitter mobile telephone, this alphanumeric character string is selectable by means of a keyboard and is transmitted via a short message to a receiver mobile telephone and, based on the same unique assignment, stored in the receiver mobile telephone, of the character string to an image, an image sequence, a sound or a sound sequence or any combination of such data, also stored in the receiver mobile telephone, is displayed on the display of the receiver mobile telephone and/or played back by its loudspeaker, so that only a short alphanumeric character string is effectively transmitted via the mobile radio network instead of the actual extensive image and/or sound data.

## Revendications

1. Procédé de transmission d'informations à partir d'un téléphone mobile compatible avec les messages courts vers au moins un autre téléphone mobile, ces téléphones mobiles fonctionnant sur un réseau de téléphonie mobile accessible au public, **caractérisé en ce qu'**une image, une séquence d'images, un son ou une séquence de sons ou une combinaison quelconque desdites données, qui sont mémorisés sur le téléphone mobile émetteur, sont affectées chacune à une séquence de caractères alphanumériques unique et cette affectation est mémorisée dans le téléphone mobile émetteur, cette séquence de caractères alphanumériques pouvant être sélectionnée au moyen du clavier et étant transmise à un téléphone mobile récepteur via un message court et y étant affichée sur l'écran du téléphone mobile récepteur et/ou lue sur le haut-parleur de celui-ci sur la base d'une affectation de la séquence de caractères, également unique, mémorisée sur le téléphone mobile récepteur à une image, une séquence d'images, un son ou une séquence de sons également mémorisés sur le téléphone mobile récepteur ou à toute combinaison desdites données, de sorte que seule une courte séquence de caractères alphanumériques est effectivement transmise via le réseau radio mobile au lieu des données d'images et/ou de sons volumineuses réelles.

2. Procédé selon la revendication 1, **caractérisé en ce que** le symbole spécifique et la séquence de caractères affectée au symbole spécifique sont sélectionnés du côté de l'émetteur au moyen d'un microprocesseur commandé par une unité d'entrée à l'aide d'un algorithme préalablement mémorisé dans une mémoire, et **en ce que**, du côté de la réception, le symbole affecté à la séquence de caractères reçue est déterminé par un microprocesseur au moyen d'un tableau de séquences de caractères et de symboles affectés à l'aide d'un algorithme préalablement mémorisé dans une mémoire et est extrait d'une mémoire dans laquelle il a été mémorisé avec la séquence de caractères avant l'extraction.

3. Procédé selon l'une des revendications précédentes, **caractérisé en ce qu'**un identificateur est ajouté à la séquence de caractères du côté de l'émission avant que la séquence de caractères ne soit envoyée, lequel identificateur identifie la séquence de caractères comme un symbole crypté, l'identificateur étant envoyé avec la séquence de caractères, et **en ce qu'**un symbole associé n'est déterminé du côté de la réception que pour les séquences de caractères reçues portant un identificateur, lequel identificateur identifie la séquence de caractères comme un symbole crypté.

4. Procédé selon l'une des revendications précédentes, **caractérisé en ce qu'**au moins deux symboles non identiques interdépendants sont sélectionnés du côté de l'émission, une séquence de caractères est déterminée du côté de l'émission pour chacun des au moins deux symboles, les séquences de caractères affectées aux symboles sont envoyées au récepteur et, du côté de la réception, la séquence de caractères est convertie en symboles associés et les symboles affectés sont affichés successivement sur un dispositif d'affichage.

5. Procédé selon l'une des revendications 1 à 4, **caractérisé en ce que** la séquence des symboles non identiques interdépendants correspond aux séquences d'images d'une image en mouvement, les symboles pouvant être récupérés du côté de l'émission dans un tableau mémorisé et les séquences de caractères affectées aux symboles individuels étant transmises au destinataire dans l'ordre.

6. Procédé selon la revendication 5, **caractérisé en ce que** des symboles non identiques interdépendants sont combinés dans un bloc.

7. Procédé selon la revendication 6, **caractérisé en ce que** les symboles combinés dans un bloc se voient attribuer une séquence de caractères identique, racine, qui ne se distingue que dans une modification, un ajout, ou une action similaire caractérisant la différence respective de la séquence d'images suivante.

8. Procédé selon l'une des revendications précédentes, **caractérisé en ce qu'**un identificateur général est ajouté à des séquences de caractères représentantes lorsqu'une séquence de symboles, séquences d'images, est transférée.

9. Procédé selon l'une des revendications 5 à 7, **caractérisé en ce que** chacun des symboles, séquences d'images, se voit attribuer un numéro d'ordre l'identifiant au moins du côté de l'émission.

10. Procédé selon la revendication 9, **caractérisé en ce que** lorsqu'un premier numéro d'ordre est sélectionné dans un bloc, tous les symboles, séquence d'images, appartenant à ce bloc sont appelés et envoyés.

11. Procédé selon la revendication 10, **caractérisé en ce qu'**une sélection partielle d'au moins deux numéros d'ordre est effectuée à partir de tous les numéros d'ordre d'un bloc, et les symboles (séquence d'images) correspondant uniquement à ces numéros d'ordre sélectionnés sont envoyés.

12. Procédé selon l'une des revendications précédentes, **caractérisé en ce qu'**au moins deux symboles interdépendants et non identiques sont sélectionnés du côté de l'émission, une séquence de caractères est déterminée du côté de l'émission pour chacun des deux symboles, les séquences de caractères affectées aux symboles sont envoyées au récepteur et les séquences de caractères sont converties en symboles associés du côté de la réception et les symboles sont affichés successivement sur un dispositif d'affichage et en même temps au moins une séquence de sons affectée aux symboles est reproduite acoustiquement.

13. Procédé selon la revendication 12, **caractérisé en ce que**, du côté de la réception, l'au moins une séquence de sons affectée aux symboles est affectée de manière permanente.

14. Procédé selon la revendication 12, **caractérisé en ce que** la séquence de sons reproduites du côté de la réception peut être influencé.

15. Procédé selon l'une des revendications précédentes, **caractérisé en ce que** plusieurs séquences de sons sont mémorisées du côté de la réception, dont au moins une des séquences de sons peut être récupérée du côté de l'émission.

16. Procédé selon l'une des revendications précédentes, **caractérisé en ce que** les caractères correspondant aux symboles et à l'au moins une séquence de sons peuvent être récupérés du côté de l'émission dans un tableau mémorisé et les caractères sont transmis à l'au moins un récepteur dans l'ordre.

17. Procédé selon l'une des revendications précédentes, **caractérisé en ce que** les images et les sons interdépendants sont combinés dans un bloc.

18. Procédé selon l'une des revendications précédentes, **caractérisé en ce que** lorsqu'une image appartenant à un bloc est sélectionnée, toutes les images et tous les sons appartenant à ce bloc sont automatiquement transmis.

19. Procédé selon l'une des revendications précédentes, **caractérisé en ce que** l'image, la séquence d'images, le son ou la séquence de sons, ou toute combinaison de ces données, peut être sélectionnée à partir d'un tableau de symboles.

20. Téléphone mobile doté d'une fonction de message court destiné à fonctionner sur un réseau de téléphonie mobile pour envoyer et/ou recevoir des informations, **caractérisé par** une mémoire (4) pour mémoriser au moins un symbole sous la forme d'une image, une séquence d'images, un son ou une séquence de sons et par un microprocesseur coopérant avec ces symboles, un moyen de sélection pour sélectionner au moins l'un des symboles, un moyen d'affectation pour affecter une séquence de caractères comportant au moins un caractère, ne représentant pas complètement le symbole à l'au moins un symbole sous la forme d'une image, d'une séquence d'images, d'un son ou d'une séquence de sons ou d'une combinaison quelconque de ceux-ci, un moyen d'émission et/ou de réception pour transmettre et/ou recevoir la séquence de caractères via un message court et un moyen d'affichage et/ou de lecture pour afficher et/ou lire l'au moins un symbole sous la forme d'une image, d'une séquence d'images, d'un son ou d'une séquence de sons ou d'une combinaison de ceux-ci.

21. Téléphone mobile doté d'une fonction de message court destiné à fonctionner sur un réseau de téléphonie mobile pour envoyer et/ou recevoir des informations selon la revendication 20, **caractérisé par** des moyens d'affectation supplémentaires pour affecter une séquence de caractères au symbole, et des moyens d'identification pour identifier la séquence de caractères en tant que symbole crypté et des moyens d'émission pour t la séquence de caractères ;
des moyens de distinction pour distinguer une séquence de caractères cryptée d'une séquence de caractères non cryptée, les moyens de distinction comprenant un moyen de reconnaissance qui reconnaît un identificateur ajouté à une séquence de caractères, lequel identificateur indique aux moyens de distinction que la séquence de caractères est un symbole crypté ;
des moyens de distinction pour distinguer une séquence de caractères cryptée d'une séquence de caractères non cryptée
des moyens d'affectation pour affecter un symbole à la séquence de caractères cryptée reçue ;
des moyens de réception pour recevoir la séquence de caractères ;
des moyens d'affichage optique et de lecture acoustique pour l'affichage et/ou la lecture de la séquence de caractères reçue.

22. Téléphone mobile doté d'une fonction de message court destiné à fonctionner sur un réseau de téléphonie mobile pour transmettre et/ou recevoir des informations selon l'une des revendications 20 et 21, **caractérisé par** :
une mémoire (4) pour mémoriser des caractères (a, b, c, d, e, f, g, e) représentant des informations audio ;
un moyen de sélection (6) pour sélectionner une information audio sous la forme d'au moins un caractère (a, b, c, d, e, f, g, e) représentant ladite information audio à partir de la mémoire (4) ;
un émetteur pour transmettre l'au moins un caractère (b) représentant l'information audio, les caractères (a, b, c, d, e, f, g, e) étant des sons (a, b, c, d, e, f, g, e) ou des lettres représentant des sons (a, b, c, d, e, f, g, e) ;
un récepteur pour recevoir des caractères (a, b, c, d, e, f, g, e) représentant des informations audio ; un convertisseur (18) pour convertir les caractères (a, b, c, d, e, f, g, e) représentant les informations audio en signaux sonores (a, b, c, d, e, f, g, e) ; un moyen de haut-parleur (24) pour reproduire les signaux sonores (a, b, c, d, e, f, g, e).

23. Téléphone mobile doté d'une fonction de message court destiné à fonctionner sur un réseau de téléphonie mobile pour transmettre et/ou recevoir des informations selon l'une des revendications 20 à 22, **caractérisé en ce qu'**un microprocesseur qui coopère avec au moins un moyen de mémorisation (16) est affecté à l'émetteur (12) et l'au moins un récepteur (14) et **en ce qu'**un nombre prédéfinissable de symboles, séquences d'images, non identiques, interdépendants avec leurs séquences de caractères associées et au moins une séquence de sons affectée aux symboles sont mémorisés dans l'au moins un moyen de mémorisation (16), et doté d'un dispositif d'affichage pour afficher les symboles ainsi que d'un dispositif de reproduction acoustique pour reproduire l'au moins une séquence de sons et d'un dispositif d'émission et de réception pour transmettre les séquences de caractères.

24. Téléphone mobile doté d'une fonction de message court destiné à fonctionner sur un réseau de téléphonie mobile pour envoyer et/ou recevoir des informations selon l'une des revendications 20 à 23, **caractérisé par** une mémoire (4) pour mémoriser des caractères (a, b, c, d, e, f, g, e) représentant des informations audio ; un moyen de sélection (6) pour sélectionner une information audio sous la forme d'au moins un caractère (a, b, c, d, e, f, g, e) représentant ladite information audio à partir de la mémoire (4) ; un émetteur pour envoyer l'au moins un caractère (b) représentant l'information audio.

25. Utilisation d'un téléphone mobile doté d'une fonction de message court, fonctionnant sur un réseau de téléphonie mobile accessible au public, avec lequel une image, une séquence d'images, un son ou une séquence de sons ou une quelconque combinaison desdites données, qui sont mémorisées sur le téléphone mobile émetteur, sont chacune affectées à une séquence de caractères alphanumériques unique et cette affectation est mémorisée sur le téléphone mobile émetteur, cette séquence de caractères alphanumériques pouvant être sélectionnée à l'aide du clavier et étant transmise par message court à un téléphone mobile récepteur et y étant affichée sur l'écran du téléphone mobile récepteur et/ou lue sur le haut-parleur de celui-ci sur la base d'une affectation de la séquence de caractères, également unique, mémorisée sur le téléphone mobile récepteur, à une image, une séquence d'images, un son ou une séquence de sons également mémorisés sur le téléphone mobile récepteur ou à toute combinaison desdites données, de sorte que seule une courte séquence de caractères alphanumériques est effectivement transmise via le réseau radio mobile au lieu des données d'images et/ou de sons volumineuses réelles.
